# EUROPÄISCHE PATENTSCHRIFT

(11) **EP 3 106 349 B1**
(45) Veröffentlichungstag und Bekanntmachung des Hinweises auf die Patenterteilung: **09.05.2018**
(21) Anmeldenummer: 16174589.8
(22) Anmeldetag: 15.06.2016
(51) Int. Cl.: B60R 1/00

(54) **SICHTSYSTEM FÜR EIN NUTZFAHRZEUG ZUR DARSTELLUNG VON GESETZLICH VORGESCHRIEBENEN SICHTFELDERN EINES HAUPTSPIEGELS UND EINES WEITWINKELSPIEGELS**
VISION SYSTEM FOR A COMMERCIAL VEHICLE FOR THE DISPLAY OF THE STATUTORY FIELDS OF VIEW OF A MAIN MIRROR AND A WIDE-ANGLE MIRROR
SYSTÈME DE VISION POUR VÉHICULE UTILITAIRE DESTINÉ À LA REPRÉSENTATION DE CHAMPS DE VISION RÈGLEMENTAIRES D'UN RÉTROVISEUR PRINCIPAL ET D'UN RÉTROVISEUR GRAND ANGLE

(30) Priorität: 16.06.2015 DE 102015007673
(43) Veröffentlichungstag der Anmeldung: 21.12.2016
(73) Patentinhaber: MEKRA LANG GmbH & Co. KG, 91465 Ergersheim (DE)
(72) Erfinder: LANG, Dr., Werner, 91465 Ergersheim (DE); ZINK, Matthias, 91620 Ohrenbach (DE); BAUER, Dr., Stefan, 91466 Gerhardshofen (DE)
(74) Vertreter: Kramer Barske Schmidtchen Patentanwälte PartG mbB

(56) Entgegenhaltungen:
- WO-A1-2009/132617
- WO-A1-2011/061238
- DE-A1-102012 001 835
- US-A1- 2009 175 492

## Beschreibung

### Gebiet der Erfindung

Die vorliegende Erfindung betrifft ein Sichtsystem für ein Nutzfahrzeug, mit dem gesetzlich vorgeschriebene Sichtfelder eines Hauptspiegels und eines Weitwinkelspiegels (Sichtfeld II bzw. Sichtfeld IV), wie sie für Deutschland beispielsweise in der ECE-Regelung ECE R46 definiert sind, für den Fahrer des Nutzfahrzeugs einsehbar dargestellt werden können.

Bei Kraftfahrzeugen sind abhängig vom Typ des Kraftfahrzeugs, wie beispielsweise Krafträdern, Kraftfahrzeugen zur Personenbeförderung, Kraftfahrzeugen zur Güterbeförderung, usw. so genannte Sichtfelder gesetzlich vorgegeben, welche durch eine Einrichtung für indirekte Sicht, herkömmlicher Weise einen Spiegel, abgebildet werden müssen und durch den auf einem Fahrersitz sitzenden Fahrer jederzeit über die Einrichtung für indirekte Sicht einsehbar sein müssen.

Bei Nutzfahrzeugen, wie beispielsweise Lkws oder Lieferwagen, gehört dazu unter anderem ein Hauptspiegel auf der Fahrer- und der Beifahrerseite, mit welchem der Fahrzeugführer einen ebenen und horizontalen Teil der Fahrbahn von bestimmter Breite einsehen kann, der sich in einer gesetzlich festgelegten Entfernung hinter den Augpunkten des Fahrzeugführers bis zum Horizont erstreckt. Außerdem muss ein Streifen geringerer Breite mittels dieses Spiegels für den Fahrzeugführer einsehbar sein, welcher in kürzerer Entfernung hinter den Augpunkten des Fahrers beginnt. Der durch den Hauptspiegel eingesehene, gesetzlich als einsehbar vorgeschriebene Bereich in der Nähe des Fahrzeugs wird im Folgenden entsprechend als Sichtfeld des Hauptspiegels bezeichnet.

Neben den Sichtfeldern des Hauptspiegels sind für Nutzfahrzeuge auch Sichtfelder als einsehbar verlangt, die gewöhnlich durch Weitwinkelspiegel abgebildet werden. Mit Weitwinkelspiegeln wird jeweils ein Bereich hinter den Augpunkten des Fahrers in einer bestimmten Erstreckung in Längsrichtung des Fahrzeugs eingesehen, welcher breiter als der durch den Hauptspiegel einsehbare Bereich ist, sich jedoch nur eine bestimmte Länge entlang des Fahrzeugs erstrecken muss. Unter Weitwinkelspiegeln sind dabei solche Spiegel zu verstehen, mit denen ein Bildwinkel erfasst werden kann, der größer ist als derjenige, der dem natürlichen Eindruck des menschlichen Auges entspricht, d. h. größer als 40-50° ist.

Gewöhnlicher Weise sind somit je Fahrzeugseite ein Hauptspiegel und ein Weitwinkelspiegel vorgesehen, häufig übereinander angeordnet, in denen die jeweiligen gesetzlich vorgeschriebenen Sichtfelder abgebildet sind. Dies bedeutet jedoch, dass der Fahrer schon um eine Fahrzeugseite einzusehen beide Spiegel gleichzeitig beobachten muss, um einen Einblick in die Sichtfelder und somit um das Fahrzeug zu haben, damit unfallkritische Situationen vermieden werden können. Gleichzeitig ist die Verzerrung aufgrund der unterschiedlichen Bildwinkel der Spiegel im Hauptspiegel und im Weitwinkelspiegel unterschiedlich, was zu Verunsicherungen, wo sich ein im Spiegel abgebildetes Objekt bezüglich des Fahrzeugs befindet, führen kann.

Zum Ersatz von Spiegeln wurden ferner Sichtsysteme für Fahrzeuge, unter anderem Nutzfahrzeuge, entwickelt, mit denen Bereiche rund um das Fahrzeug auf übersichtliche und einfache Weise für den Fahrzeugführer beobachtet werden können und die gleichzeitig den Einfluss auf die Umströmung des Fahrzeugs minimieren und somit einen verringerten Kraftstoffverbrauch erwarten lassen. Solche Sichtsysteme beinhalten neben mindestens einer Aufnahmeeinheit, die beispielweise durch eine Kamera oder andere Bildsensoren realisiert sein kann, eine Anzeigeeinheit im Fahrerhaus, beispielsweise ein Display. Die von den Aufnahmeeinheitten aufgenommenen Bilder werden auf den Anzeigeeinheiten im Fahrerhaus dargestellt.

In der DE 10 2011 010 624 A1 ist ein solches Sichtsystem für ein Nutzfahrzeug beschrieben, mit Hilfe dessen gesetzlich vorgeschriebene Sichtfelder abgebildet werden können. In dem dort beschriebenen System werden mindestens zwei der im Fahrbetrieb zur permanenten Anzeige gesetzlich vorgeschriebenen Sichtfelder dauerhaft und in Echtzeit auf der Anzeigeeinheit im Fahrerhaus angezeigt. Die Sichtfelder werden in einer gemeinsamen Darstellung, beispielsweise nebeneinander, gezeigt. Es ist auch bekannt, die Sichtfelder in überlappender Darstellung auf der Anzeigeeinheit anzuzeigen.

Aus der DE 19900498 B4 ist ferner ein Verfahren und eine Einrichtung zur Einsichtnahme des rückwärtigen Beobachtungsraums bei Kraftfahrzeugen bekannt, bei denen der Beobachtungsraum auf einem Bildschirm abgebildet wird und einen geradlinig nach hinten gerichteten Bereich und einen toten Winkelbereich umfasst, wobei der tote Winkelbereich in einem größeren Winkelbereich erfasst wird als der geradlinig nach hinten gerichtete Bereich. Die beiden Winkelbereiche werden durch voneinander unabhängige Kameraelemente erfasst. Ferner werden die beiden Bereiche in einem umgekehrt proportionalen Breitenverhältnis auf einem gesplitteten oder zweisegmentigen Bildschirm nebeneinander angezeigt.
Aus der DE 10 2012 001 835 A1 ist ein Sichtsystem für ein Nutzfahrzeug zur Darstellung von gesetzlich vorgeschriebenen Sichtfeldern eines Hauptspiegels und eines Weitwinkelspiegels derselben Fahrzeugseite in einem Fahrerhaus des Nutzfahrzeugs bekannt. Das Sichtsystem enthält eine Anzeigeeinheit im Fahrerhaus, eine Erfassungseinheit und eine Berechnungseinheit. Die Erfassungseinheit ist angepasst, mindestens ein erstes Bild, das das Sichtfeld des Hauptspiegels beinhaltet, und ein zweites Bild, das zumindest den Teil des Sichtfelds des Weitwinkelspiegels beinhaltet, der nicht Teil des Sichtfelds des Hauptspiegels ist, zu erfassen. Zumindest das zweite Bild hat in einer Weitwinkelrichtung einen Weitwinkelbildwinkel, der größer ist als es dem natürlichen Eindruck des menschlichen Auges entspricht, und ist damit verzerrt. Das erste Bild ist in der Weitwinkelrichtung des zweiten Bilds im Wesentlichen unverzerrt. Die Berechnungseinheit ist angepasst, das erste Bild und das zweite Bild derart zu einem gemeinsamen Bild nahtlos und unmittelbar aneinander angrenzend zusammenzusetzen, dass das erste Bild und das zweite Bild eine gemeinsame Perspektive haben und zumindest das zweite Bild zumindest in einem Modifikationsbereich in der Weitwinkelrichtung modifiziert ist, dass die Bilderstreckung in der Weitwinkelrichtung verringert ist. Die Darstellungen des ersten Bilds und des zweiten Bilds fluchten in der Längsrichtung des Nutzfahrzeugs, senkrecht zur Weitwinkelrichtung.
In der WO 2011/061238 A1 wird ein Sichtsystem für ein Fahrzeug offenbart, bei dem auf einem Monitor zwei Bilder dargestellt werden, die von unterschiedlichen Erfassungseinheiten erfasst werden bzw. unterschiedliche Bereiche um ein Fahrzeug herum zeigen.

US 2009/0175492 A1 ist auf ein Sichtsystem für ein Fahrzeug gerichtet, das dem Fahrer ein nach unten gerichtetes Bild der Fahrzeugumgebung über einen 300-Grad-Bereich zeigt. Das gezeigte Bild setzt sich zumindest aus zwei getrennt voneinander aufgenommenen Teilbildern zusammen, die einen Überlappungsbereich aufweisen.

### Darstellung der Erfindung

Davon ausgehend ist es Aufgabe der Erfindung, ein Sichtsystem für ein Nutzfahrzeug zur Darstellung von gesetzlich vorgeschriebenen Sichtfeldern eines Hauptspiegels und eines Weitwinkelspiegels (Sichtfeldern II und IV) derselben Fahrzeugseite in einem Fahrerhaus des Nutzfahrzeugs bereitzustellen, mit dem der Fahrer auf einfache Weise den räumlichen Bezug von etwaigen Hindernissen in Verhältnis zu seinem Fahrzeug erkennen kann und mit welchem gleichzeitig dauerhaft, das heißt z. B. ohne Unterbrechung bei eingeschalteter Zündung, und zuverlässig in Echtzeit die Sichtfelder eines Hauptspiegels und eines Weitwinkelspiegels derselben Fahrzeugseite angezeigt werden. Das System soll ferner so ausgelegt sein, dass es ergonomisch günstig ist, das heißt bei dem sich der Fahrer möglichst ohne lange Anpassungszeit problemlos in dem eingesehenen Bereich um das Fahrzeug orientieren kann.
Diese Aufgabe wird mit einem Sichtsystem für ein Nutzfahrzeug mit den Merkmalen des Anspruchs 1 gelöst. Bevorzugte Ausführungsformen sind in den abhängigen Ansprüchen angegeben.
Der Erfindung liegt der Gedanke zu Grunde, die Darstellungen, die gewöhnlicher Weise auf dem Hauptspiegel und dem Weitwinkelspiegel einer Fahrzeugseite zu sehen sind, in ein gemeinsames Bild zu kombinieren, das durchgängig und aus mindestens zwei einzelnen Bildern überlappend oder unmittelbar aneinander angrenzend zusammengesetzt ist, so dass der Fahrer nicht zwei Darstellungen gleichzeitig sondern lediglich eine Darstellung betrachten muss und dennoch einen vollständigen Überblick über die Umgebung von zumindest einer Fahrzeugseite hat. Außerdem soll das Bild für den Fahrer in möglichst ergonomischer Weise gestaltet sein, was bedeutet, dass das Bild möglichst realitätsnah ist. Um gleichzeitig das Weitwinkelspiegelsichtfeld und das Hauptspiegelsichtfeld abdecken zu können, ist es daher die der Erfindung zu Grunde liegende Idee, Bilder, die unterschiedliche Bildwinkel bzw. Verzerrungen haben, welche jeweils eines der Sichtfelder beinhalten, zu einem gemeinsamen Bild zusammenzusetzen, wobei zumindest ein erster Modifikationsbereich des Bildes mit dem größeren Bildwinkel, der nicht dem des natürlichen Eindrucks des menschlichen Auges entspricht, derart modifiziert wird, dass einerseits kein abrupter Übergang sondern ein verlaufender, verschwimmender Übergang im Hinblick auf die durch die verschiedenen Blickwinkel hervorgerufene Verzerrung zwischen den Bildern vorhanden ist, d. h. dass zwischen den Bildern kein abrupter Sprung, was die unterschiedlichen Verzerrungen angeht, erscheint, und gleichzeitig die Erstreckung des Bilds mit größerer Aufspreizung, d. h. Verzerrung für die Darstellung verkleinert wird, ohne wesentliche Informationen oder Ergonomie bzgl. der Orientierung auf dem zusammengesetzten gemeinsamen Bild zu verlieren. Dabei wird zumindest eine der Grenzlinien zwischen einem Modifikationsbereich und einem nicht modifizierten Bereich durch eine nicht-lineare Funktion, die vorzugsweise bogenförmig ist, oder durch eine nicht konstante, lineare Funktion beschirieben. Unter einer "nicht konstanten, linearen Funktion" ist zu verstehen, dass der Verlauf einer Grenzlinie zwischen einem Modifikationsbereich und einem nicht modifizierten Bereich auf dem gemeinsamen Bild nicht parallel zu einer der Achsen des kartesischen Koordinatensystems ist, wobei eine Achse des kartesischen Koordinatensystems eine Schnittachse zwischen der Fahrzeugmittelebene und der Bodenebene, auf der sich das Fahrzeug bewegt, ist. Das heißt, dass beispielsweise auf einem rechteckigen gemeinsamen Bild, auf dem die Fahrzeuglängsachse parallel zu einer Seitenkante des gemeinsamen Bilds verläuft, die Grenzlinie zumindest einen Abschnitt aufweist, der zu keiner Seitenkante des gemeinsamen Bilds parallel verläuft. Somit verläuft zumindest ein Abschnitt der Grenzlinie bezüglich einer Seitenkante des gemeinsamen Bilds unter einem vorbestimmten Winkel.

Unter einer "nicht-linearen Funktion" ist zu verstehen, dass ein Verlauf der Grenzlinie eines Modifikationsbereichs und/oder eines Bilds zumindest einen Abschnitt aufweist, der wenigstens teilweise bogenförmig ist, d. h. eine Krümmung aufweist, die nicht gleich Null ist.

Durch die Ausgestaltung von zumindest einer der Grenzlinien zwischen einem Modifikationsbereich und einem nicht modifizierten Bereich als nicht-lineare Funktion oder nicht konstante, lineare Funktion kann dem Fahrer die Darstellung des gemeinsamen Bilds in bestimmen Bereichen, insbesondere kritischen Bereichen, verbessert dargestellt werden, was zu einer noch realitätsnäheren Darstellung führen kann.

Außerdem kann das gemeinsame Bild zumindest einen zweiten Modifikationsbereich, der von dem ersten Modifikationsbereich verschieden ist, aufweisen, in dem zumindest eins der mehreren Bilder, vorzugsweise ein anderes Bild als das erste und das zweite Bild, in der Längsrichtung des Nutzfahrzeugs und/oder in einer Weitwinkelrichtung der mehreren Bilder derart modifiziert ist, dass dessen Bilderstreckung in dieser Richtung verringert ist. Die Weitwinkelrichtung kann dabei die Weitwinkelrichtung des ersten bzw. zweiten Bilds oder aber eine Weitwinkelrichtung des jeweils modifizierten Bilds sein.

Zudem kann die Berechnungseinheit ferner angepasst sein, zumindest eins der mehreren Bilder, das nicht das erste und zweite Bild beinhaltet, im gemeinsamen Bild zu überlagen. Das überlagernde Bild wird bevorzugt an einer Position im gemeinsamen Bild eingeblendet, an der zum aktuell vorliegenden Fahrzustand unkritische Bereiche im gemeinsamen Bild enthalten sind. Beispielsweise sind dies bei Geradeausfahrt mit relativ hoher Geschwindigkeit die Bereiche des gemeinsamen Bilds in der Nähe des Horizonts hinter dem Fahrzeug oder seitlich vorne neben dem Fahrzeug, bei einem Abbiegevorgang die Bereiche des gemeinsamen Bilds am hinteren Horizont. Somit können, z. B. für jeweilige Fahrsituationen angepasst, speziell kritische Bereiche rund um das Fahrzeug ausreichend und mit hoher Auflösung bzw. großem Informationsgehalt gezeigt werden, was bei der Erweiterung der Sicht in den Bereich um das Fahrzeug herum hilft und die Ergonomie für den Fahrer des Fahrzeugs verbessert. Ferner kann somit der Informationsgehalt der kritischen Bereiche erhöht werden, wobei unkritische Bereiche nicht unnötig dargestellt werden.

Vorzugsweise ist die Berechnungseinheit dazu angepasst, alle die mehreren Bilder derart zu dem gemeinsamen Bild nahtlos unmittelbar aneinandergrenzend zusammenzusetzen, dass alle die mehreren Bilder eine gemeinsame Perspektive haben. Dies führt zu einem gemeinsamen Bild, dass verhältnismäßig realitätsnah wahrgenommen wird und auf dem sich der Fahrer schnell orientieren kann. Außerdem führt dies dazu, dass das gemeinsame Bild verhältnismäßig realitätsnah wahrgenommen wird, auch wenn die im Weitwinkelspiegel bzw. durch Weitwinkelobjektive übliche Verzerrung im Weitwinkelbereich des Bildes nach wie vor vorhanden ist und somit ein großer Bildbereich dargestellt werden kann. Die realitätsnahe Darstellung bzw. die Orientierung für den Fahrer auf dem Bild kann zudem dadurch verbessert werden, dass ein Fahrzeugbezug im gemeinsamen Bild vorhanden ist. Dieser Fahrzeugbezug kann ein durch die Bilderfassungseinheit miterfasster Fahrzeugbereich (z. B. Heckkante, Seitenbereiche der Fahrerkabine oder Ähnliches) oder ein entsprechender, nachträglich dem Bild überlagerter Fahrzeugbezug sein.

Zur einfachen, verwirrungsfreien Orientierung auf dem Bild trägt auch bei, wenn die mehreren Bilder so zusammengesetzt sind, dass sie bezüglich ihrer Erstreckung in Längsrichtung und in Weitwinkelrichtung fluchten. Dadurch entsteht der Eindruck eines einzigen Bilds, das je nach Bildbereich unterschiedliche Auflösungen hat, sich aber sonst bei einem Weitwinkelbild mit Bildmitte im unverzerrten Teil des gemeinsamen Bilds, d. h. aus dem ersten Bild stammend, nicht wesentlich unterscheidet, aber im Vergleich zu diesem unbearbeiteten (aufgenommenen) Bild in der Bildbreitenrichtung, die der Weitwinkelrichtung entspricht und im Wesentlichen senkrecht zur Fahrzeuglängsachse ist, und/oder in der Bildlängsrichtung, die parallel zur Fahrzeuglängsachse ist, komprimiert ist.

Somit kann durch die erfindungsgemäße Darstellung sowohl der große Sichtbereich des Weitwinkelspiegels dargestellt werden als auch, wie es Fahrer gewohnt sind, der Hauptspiegelsichtbereich ohne wesentliche Verzerrung darstellt werden. Zudem können dem Fahrer weitere Bereiche der Fahrzeugumgebung dargestellt werden, um die Sicht in den Fahrzeugumgebungsbereich zu vergrößern und bevorzugt fahrsituationsbedingte, kritische Bereich anzuzeigen bzw. darauf hinzuweisen.

Unter "Weitwinkel" wird gewöhnlicher Weise ein Bildwinkel verstanden, der größer ist als es derjenige ist, der dem natürlichen Eindruck des menschlichen Auges entspricht, was üblicher Weise Bildwinkel über 40 - 50° sind. Ferner wird unter gemeinsamer Perspektive verstanden, dass die Blickrichtungen zwischen den mehreren Bildern im Wesentlichen identisch sind, also das erste Bild und das zweite Bild nicht beispielsweise zueinander verdreht oder über Kopf angeordnet werden. Als "Weitwinkelrichtung" wird im Folgenden eine horizontale und in der Regel bodenparallele Richtung verstanden, entlang derer ein Weitwinkelobjektiv bzw. - spiegel in einem Weitwinkelmodus abbildet.

Unter optischer Verzerrung bzw. Verzeichnung ist ein geometrischer Abbildungsfehler optischer Systeme zu verstehen, der zu einer lokalen Veränderung des Abbildungsmaßstabs führt. Die Maßstabsänderung beruht auf einer Änderung der Vergrößerung mit zunehmendem Abstand des Bildpunkts von der optischen Achse. Beispielsweise gibt es hier bei Verwendung von Weitwinkeleinrichtungen zur Aufnahme von Bildern eine so genannte tonnenförmige Verzeichnung oder Verzerrung, bei der die Vergrößerung zu den Rändern des Bildfelds hin abnimmt. Bei der tonnenförmigen Verzerrung ist es entsprechend so, dass die Verzerrung in der Bildmitte verhältnismäßig gering und kaum wahrnehmbar ist, d. h. dass die Verzerrung dort im Wesentlichen der Wahrnehmung entspricht, die durch den natürlichen Eindruck des menschlichen Auges entsteht.

Zur Erzeugung des ersten Bilds und des zweiten Bilds ist es denkbar, dass das zweite Bild in allen Bildrichtungen als Weitwinkelbild erzeugt wird oder aber zumindest eine Weitwinkelrichtung hat. Die Weitwinkelrichtung ist dabei zumindest die horizontale Richtung, die im Wesentlichen senkrecht zur Längsachse des Nutzfahrzeugs ist.

Die mehreren Bilder mit dem mindestens einen ersten Bild und dem zweiten Bild können durch die Erfassungseinheit auf zwei verschiedene, vorteilhafte Arten erfasst werden.

So ist es nach einer bevorzugten Ausführungsform möglich, dass die Erfassungseinheit eine gemeinsame Aufnahmeeinheit, wie beispielsweise einen Bildsensor oder eine Kamera, beinhaltet, welche mittels einer Weitwinkeleinrichtung ein Bild aufnimmt, das sowohl das Sichtfeld des Hauptspiegels als auch das Sichtfeld des Weitwinkelspiegels beinhaltet. In diesem Fall liegt das Sichtfeld des Hauptspiegels vorzugsweise im mittleren Bereich des aufgenommenen Bildes, so dass es im Wesentlichen unverzerrt ist. In einer bevorzugten Ausführungsform kann in diesem Fall der Bildwinkel nahezu ein 180° Bildwinkel sein, d. h. dass beispielsweise Fischaugenobjektive oder Ähnliches zum Erzeugen des Bilds verwendet werden können. In dieser bevorzugten Ausführungsform ist ferner eine Umwandlungseinheit vorgesehen, die beispielsweise in die Berechnungseinheit oder aber in die Erfassungseinheit integriert sein kann, und welche das durch die Aufnahmeeinheit aufgenommene gemeinsame Bild in die mehreren Bilder separiert.

Nach einer alternativen bevorzugten Ausführungsform sind mehrere Aufnahmeeinheiten vorgesehen, die jeweils zumindest eins der mehreren Bilder erfassen. Beispielsweise ist für das erste Bild und das zweite Bild jeweils eine Aufnahmeeinheit vorgesehen, so dass zumindest eine erste Aufnahmeeinheit und eine zweite Aufnahmeeinheit vorhanden sind. In diesem Fall kann die erste Aufnahmeeinheit für das erste Bild einen Bildwinkel haben, der dem des natürlichen Eindrucks des menschlichen Auges entspricht, während die zweite Aufnahmeeinheit eine Weitwinkeleinrichtung sein kann. Für die Aufnahmeeinheiten können wiederum beispielsweise Kameras oder Bildsensoren verwendet werden.

Nach einer vorteilhaften Ausführungsform hat das erste Bild einen virtuellen Sichtkegel von 40 - 50°, was derjenige ist, der dem des menschlichen Auges entspricht. Je nach Erzeugung des ersten Bilds kann dies dadurch geschehen, dass ein zentraler Bereich, der diesem virtuellen Sichtkegel entspricht, aus einem Weitwinkelbild herausgeschnitten wird, oder dass ein Objektiv mit einem entsprechenden 40 - 50° Bildwinkel zur Erzeugung speziell des ersten Bilds verwendet wird. Dies bedeutet, dass das erste Bild im Wesentlichen einen unverzerrten Eindruck auf den Fahrer macht.

Ferner können für die weiteren Bilder jeweils getrennte Aufnahmeeinheiten vorgesehen sein, die jeweils zumindest ein weiteres Bild mit weiteren Sichtbereichen erfassen, die von der Berechnungseinheit zum gemeinsamen Bild verarbeitet werden können. Beispielsweise umfassen die weiteren Sichtbereiche zumindest teilweise das Sichtfeld eines Rampenspiegels (Sichtfeld V) und/oder zumindest teilweise das Sichtfeld eines Frontspiegels (Sichtfeld VI).

Das Erzeugen der mehreren Bilder kann durch geeignete Aufnahmeeinheiten geschehen, wie beispielsweise Kameras oder Bildsensoren. Es ist denkbar, eine einzige Aufnahmeeinheit mit einer oder mehreren Teileinheiten, wie einzelnen Bildsensoren, oder eine oder mehrere voneinander unabhängige Aufnahmeeinheiten, die getrennt voneinander am Fahrzeug angeordnet sind, vorzusehen. Zumindest eine der Aufnahmeeinheiten bzw. Teileinheiten ist für das Erzeugen eines Bilds mit Weitwinkel angepasst, das nach Bedarf das erste und das zweite Bild oder nur das zweite Bild beinhalten kann. Außerdem kann zumindest eine der Aufnahmeeinheiten bzw. Teileinheiten für das Erzeugen eines Bilds mit einem weiteren Fahrzeugumgebungsbereich angepasst sein, der zumindest teilweise nicht Teil des ersten und zweiten Bilds ist.

Wenn vorzugsweise das zweite Bild nur in einer Richtung bearbeitet wird, wenn es mit dem ersten Bild zusammengesetzt wird, vorzugsweise in der Richtung, die senkrecht zur Nutzfahrzeugmittelebene ist, ist der natürliche Eindruck nach dem Zusammensetzen der Bilder besonders günstig, so dass keine langen Adaptionszeiten zur Gewöhnung an das Bild und zur Orientierung bezüglich der Fahrzeugposition in Bezug zu einem möglichen Hindernis, das auf dem Bild gezeigt ist, für den Fahrer erforderlich sind. D. h. der Fahrer nimmt die Modifikation beim Betrachten quasi nicht wahr. Dazu trägt insbesondere auch das Fluchten der Bilder entlang der Nutzfahrzeuglängsachsenrichtung bei.

Wenn ferner dasjenige Bild, das sich im oberen oder unteren Bildbereich des gemeinsamen Bilds befindet, in nur einer Richtung bearbeitet wird, wenn es mit den anderen mehreren Bildern zusammengesetzt wird, vorzugsweise in der Richtung parallel zur Nutzfahrzeugmittelebene, ist der natürliche Eindruck nach dem Zusammensetzen der Bilder besonders günstig, so dass keine langen Adaptionszeiten zur Gewöhnung an das Bild und zur Orientierung bezüglich der Fahrzeugposition in Bezug zu einem möglichen Hindernis für den Fahrer erforderlich sind.

Nach einer bevorzugten Ausführungsform beinhaltet eins der mehreren Bilder oder das gemeinsam aufgenommene Bild einen Seitenbereich und/oder Frontbereich des Nutzfahrzeugs. Anschließend kann durch die Berechnungseinheit bzw. die Umwandlungseinheit das erste und/oder das zweite Bild derart modifiziert bzw. angepasst werden, dass der aufgenommene Nutzfahrzeugseitenbereich und/oder Nutzfahrzeugfrontbereich im gemeinsamen Bild, das mittels der Anzeigeeinheit im Fahrerhaus dargestellt wird, gezeigt werden/wird. Denkbar ist, den Seitenbereich mit dem ersten Bild abzubilden bzw. aus dem gemeinsam aufgenommenen Bild das erste Bild so herauszuschneiden, dass der Nutzfahrzeugseitenbereich im ersten Bild enthalten ist, und die mehreren Bilder dann so zum gemeinsamen Bild zusammenzusetzen, dass das zweite Bild an der dem Nutzfahrzeugseitenbereich abgewandten Seite des ersten Bilds an das erste Bild anschließt. Zudem kann der Fahrzeugfrontbereich in einem der mehreren Bilder des gemeinsamen Bild enthalten sein.

Möglich ist auch, vor allem bei getrennter Aufnahme des ersten und zweiten Bilds, dass der Nutzfahrzeugseitenbereich im zweiten Bild enthalten ist und die Bilder anschließend so zusammengesetzt werden, dass der Nutzfahrzeugseitenbereich gezeigt ist, anschließend der im Wesentlichen unverzerrte Bereich des ersten Bilds mit dem Hauptspiegelsichtfeld und daran anschließend in dieser Reihenfolge der verzerrte Bereich des zweiten Bilds mit dem Weitwinkelspiegelsichtfeld, wobei eine Modifikation durch die Berechnungseinheit vorzugsweise in diesem Fall nur zwischen dem verzerrten Bereich des zweiten Bilds und dem ersten Bild erforderlich ist, während der Fahrzeugseitenbereich, da er sich bei günstiger Position im Weitwinkelbild im Wesentlichen unverzerrt darstellen lässt, lediglich überlagert wird. Denkbar ist jedoch auch, in diesem Fall zwei Übergangsbereiche vorzusehen, so dass das erste Bild im Wesentlichen in einen mittleren Bereich des zweiten Bilds eingebettet wird und in jedem Übergangsbereich in der Weitwinkelrichtung eine Modifikation des zweiten Bilds erfolgt.

Die mehreren Bilder werden bezüglich der Fahrzeuglängsrichtung, also bezüglich der Sicht in der Richtung, die sich in eine Richtung im Wesentlichen parallel zur Fahrzeuglängsachse erstreckt, fluchtend zusammengesetzt, so dass Horizont und gemeinsamer Beginn neben dem Fahrerhaus vorliegen. Dies führt zu gewöhnlichen, rechteckigen gemeinsamen Bildern, auf denen sich der Fahrer leicht zurechtfinden kann. Gerade wenn die mehreren Bilder durch eine gemeinsame Aufnahmeeinheit aufgenommen werden, ist dies leicht zu realisieren, da die mehreren Bilder in der gewünschten Weise ohnehin fluchten.

In einer Ausgestaltung weist die Erfassungseinheit eine gemeinsame Aufnahmeeinheit zum Aufnehmen eines Bilds, das die mehreren Bilder beinhaltet, und eine Umwandlungseinheit auf, die die mehreren Bilder aus dem aufgenommenen Bild extrahiert. Somit weisen die mehreren Bilder bereits eine gemeinsame Perspektive auf.

In einer weiteren Ausgestaltung liegt zumindest ein zweiter Modifikationsbereich in einem oberen Bildbereich und/oder zumindest ein zweiter Modifikationsbereich in einem unteren Bildbereich jeweils angrenzend an das erste Bild und angrenzend an das zweite Bild und grenzt an den ersten Modifikationsbereich in Längsrichtung des Nutzfahrzeugs an.

In einer weiteren Ausgestaltung liegt zumindest ein zweiter Modifikationsbereich in einem oberen Bildbereich und/oder zumindest ein zweiter Modifikationsbereich in einem unteren Bildbereich jeweils angrenzend an nur das erste Bild und grenzt in Weitwinkelrichtung an den ersten Modifikationsbereich an.

In einer weiteren Ausgestaltung liegt zumindest ein zweiter Modifikationsbereich in einem oberen Bildbereich und/oder zumindest ein zweiter Modifikationsbereich in einem unteren Bildbereich jeweils angrenzend an nur das erste Bild und überlappt zumindest teilweise den zweiten Modifikationsbereich.

In einer weiteren Ausgestaltung liegt zumindest ein zweiter Modifikationsbereich in einem dem zweiten Bild gegenüberliegenden Bildseitenbereich, beispielsweise angrenzend an nur das erste Bild.

In einer bevorzugten Ausführungsform ist die Berechnungseinheit ferner angepasst, mindestens eins der mehreren Bilder dem gemeinsamen Bild, in dem das mindestens erste Bild und das zweite Bild nahtlos unmittelbar aneinander grenzend zusammengesetzt sind, zu überlagern. Das eingeblendete Bild kann beispielsweise mit dem ersten und zweiten Bild nicht in Bezug stehen, so dass das resultierende gemeinsame Bild keine gemeinsame Perspektive hat. Der in dem eingeblendeten Bild enthaltene Fahrzeugumgebungsbereich kann z. B. in Abhängigkeit des Fahrzustands des Nutzfahrzeugs ausgewählt werden. Beispielsweise kann bei einer langsamen Vorwärtsfahrt das Sichtfeld eines Frontspiegels eingeblendet werden oder bei einer Kurvenfahrt der sich unmittelbar neben dem Nutzfahrzeug befindende Bereich, z. B. das Sichtfeld eines Rampenspiegels.

In einer bevorzugten Ausgestaltung wird das mindestens eine der mehreren Bilder, das das gemeinsame Bild überlagert, unbearbeitet eingeblendet, d. h. es ist ohne Modifikationsbereich vorgesehen. In einer weiteren Ausgestaltung befindet sich zumindest ein zweiter Modifikationsbereich in dem mindestens einen der mehreren Bilder, das das gemeinsame Bild überlagert.

In einer bevorzugten Ausgestaltung, in der die Berechnungseinheit angepasst ist, zumindest eins der mehreren Bilder, das nicht das erste Bild und das zweite Bild ist, im gemeinsamen Bild zu überlagern, weist die Erfassungseinheit eine gemeinsame Aufnahmeeinheit auf, die das erste Bild und/oder das zweite Bild sowie zumindest eins der das gemeinsame Bild überlagernden Bilder erfasst. Das heißt, dass die Berechnungseinheit aus dem von der gemeinsamen Aufnahmeeinheit erfassten Bild einen oder mehrere dem ersten Bild und/oder zweiten Bild entsprechende Bereiche für das gemeinsame Bild verwendet und zusätzlich einen weiteren Bildbereich davon verwendet, der dem gemeinsamen Bild überlagernd eingeblendet wird.

In einer weiteren Ausgestaltung sind die Modifikationsbereiche und/oder die mehreren Bilder durch Grenzlinien angedeutet, die im gemeinsamen Bild sichtbar angezeigt werden. Die Grenzlinien der Bilder können, wie bereits in Bezug auf die Grenzlinien der Modifikationsbereiche erläutert, eine nicht-lineare oder nicht konstante lineare Funktion beschreiben. In einer bevorzugten Ausgestaltung fallen die Grenzlinien zwischen den mehreren Bildern mit den Grenzlinien zwischen einem Modifikationsbereich und einem nicht modifizierten Bereich zusammen. Auch kann die Form der Grenzlinien in Abhängigkeit des Fahrzustands des Nutzfahrzeugs gewählt werden, so dass beispielsweise bei einer Kurvenfahrt eine Anpassung von einer linearen konstanten Grenzlinie zu einer nicht-linearen oder nicht konstanten linearen Grenzlinie stattfinden kann, um das Sichtfeld beispielsweise in einem für die vorliegende Fahrsituation kritischen Bereich kurzzeitig zu erweitern.

Die Modifikation in den Modifikationsbereichen kann beispielsweise dadurch geschehen, dass im jeweiligen Bild, in dem sich der zu modifizierende Modifikationsbereich befindet, jede n-te Pixelreihe, wenn man in der Weitwinkelrichtung und/oder in der Längsrichtung läuft, weggelassen wird. Dabei ist n ≥ 2. Eine andere bevorzugte Möglichkeit für die Modifikation ist das Stehenlassen jeder k-ten Pixelreihe, wobei k ≥ 2. So können beispielsweise jeweils zwei aufeinander folgende Pixelreihen gelöscht und jede dritte Pixelreihe stehengelassen werden.

Nach einer besonders einfachen Modifikationsweise ist n bzw. k dabei über die gesamte darzustellende Bildbreite (in der Weitwinkelrichtung) und/oder über die gesamte darzustellende Bildhöhe (in der Längsrichtung) des Bilds konstant.

Die Weitwinkelrichtung ist dabei eine Öffnungswinkelrichtung, die auf dem zweiten Bild dargestellt wird und auf dem zweiten Bild im Wesentlichen in einer Bildbreitenrichtung erscheint.

Möglich ist auch, nur in einem Bereich des jeweiligen Bilds die Modifikation durch die Berechnungseinheit vorzunehmen. Alternativ kann über die gesamte darzustellende Breite und/oder Höhe des jeweiligen Bilds die Modifikation erfolgen.

Alternativ dazu ist es möglich, dass n bzw. k über den zu modifizierenden Bereich des jeweiligen Bilds, der den Modifikationsbereich bildet, variabel ist. In diesem Fall wird vorzugsweise nahe beim Fahrzeug ein größeres n verwendet, das mit abnehmender Entfernung vom Fahrzeug kleiner wird. Oder es wird mit zunehmender Entfernung vom Fahrzeug ein größeres k verwendet, d. h. in beiden Fällen ist die Ausdünnung entfernt vom Fahrzeug stärker. Dabei kann die Abnahme von n bzw. Zunahme von k kontinuierlich oder aber stufenweise erfolgen.

Das Weglassen von Pixelreihen ist eine einfache und kostengünstige Möglichkeit, sowie eine Möglichkeit, die verhältnismäßig wenig Berechnungsaufwand erfordert, im Übergangsbereich und verzerrten Weitwinkelbereich das jeweilige Bild zu komprimieren und dennoch eine Anpassung an den Bildwinkel und damit die Verzerrung des ersten Bilds beizubehalten.

Alternativ oder zusätzlich können die Modifikationsbereiche eine Vielzahl von Modifikationslinien aufweisen, die sich durch den gesamten Modifikationsbereich erstrecken. Die Modifikation der Modifikationsbereiche kann, wie bereits in Bezug auf Pixelreihen beispielhaft erläutert, z. B. derart erfolgen, dass diejenigen Pixel, über die die Modifikationslinien verlaufen, weggelassen werden. In ähnlicher Weise können diejenigen Pixel, über die die Modifikationslinien nicht verlaufen, stehen gelassen werden. Die Modifikationslinien können lineare, konstante Funktionen, nicht-lineare Funktionen oder nicht-konstante, lineare Funktionen beschreiben. In einer bevorzugten Ausgestaltung verlaufen die Modifikationslinien parallel zur Grenzlinie des jeweiligen Modifikationsbereichs.

Durch die Verwendung von unterschiedlichen Bildsensoren für die jeweiligen Bilder bzw. unterschiedlichen Kameras oder Aufnahmeteileinheiten ist es möglich, die mehreren Bilder mit unterschiedlichen Auflösungen bzw. Winkelauflösungen zu erzeugen, wobei die Auflösung bzw. Winkelauflösung des ersten Bilds vorzugsweise größer als die Auflösung bzw. Winkelauflösung des zweiten Bilds ist. Dies entspricht ebenfalls dem, was der Fahrer von gewöhnlichen Haupt- und Weitwinkelspiegeln gewohnt ist, nämlich eine schärfere Darstellung im Hauptspiegel als im Weitwinkelspiegel. Außerdem kann dann im fahrzeugnahen Bereich mit großer Genauigkeit abgebildet werden. Auch die Modifikation des zweiten Bilds führt zu einer Art Verringerung der Auflösung im bearbeiteten Bereich.

Nach einer bevorzugten Ausführungsform ist die Weitwinkelrichtung im Wesentlichen senkrecht zur Nutzfahrzeuglängsachse und horizontal. Dies entspricht den Richtungen, die gewöhnlicher Weise jetzt durch einen Weitwinkelspiegel dargestellt werden.

Durch die Modifikation des gemeinsamen Bilds in den Modifikationsbereichen können die angezeigten Sichtfelder mit nur geringer Verzerrung dargestellt werden, wodurch dem Betrachter ein nahezu realitätsnahes Bild der Fahrzeugumgebung, insbesondere der gesetzlich vorgeschriebenen Sichtfelder, gezeigt werden kann. Außerdem können für die aktuelle Fahrsituation unkritische Bereiche gezielt im gemeinsamen Bild durch kritische Bereiche überblendet werden, wodurch die Aufmerksamkeit des Fahrers darauf gelenkt wird.

Bezüglich der Anzeigeeinheit im Fahrerhaus ist es aus ergonomischen Gesichtspunkten vorteilhaft, die Anzeigeeinheit an der A-Säule anzuordnen. Dies entspricht im Wesentlichen der Position, wo der Fahrer eines Nutzfahrzeugs ein indirektes Sichtsystem für die vorgeschriebenen Sichtfelder II und IV erwartet. Diese Anzeigeeinheit kann vorzugsweise durch ein Display oder aber durch eine Projektion direkt auf beispielsweise die A-Säule oder ein anderes Fahrzeugstrukturbauteil erfolgen.

Selbstverständlich ist es möglich, sowohl für den Fahrerseitenbereich als auch für den Beifahrerseitenbereich oder aber nur für eine der beiden Seiten ein Sichtsystem vorzusehen. Wird auf beiden Seiten ein Sichtsystem eingesetzt, kann dies in ein System kombiniert sein, so dass z. B. die Berechnungseinheit für beide Seiten genutzt wird, oder es können zwei vollständig voneinander unabhängige Systeme eingesetzt werden.

### Kurze Beschreibung der Figuren

Nachfolgend wird die Erfindung beispielhaft anhand der beigefügten Figuren beschrieben, in denen:
- Fig. 1: ein erfindungsgemäßes Sichtsystem zeigt;
- Fig. 2: die gesetzlich vorgeschriebenen Sichtfelder eines Hauptspiegels und eines Weitwinkelspiegels auf beiden Seiten eines Nutzfahrzeugs und die gesetzlich vorgeschriebenen Sichtfelder eines Frontspiegels und eines Rampenspiegels in einer schematischen Draufsicht zeigt;
- Fig. 3: die durch die Aufnahmeeinheiten aufgenommenen virtuellen Sichtkegel eines Nutzfahrzeugs in einer schematischen Draufsicht veranschaulicht;
- Fig. 4: eine beispielhafte Ansicht mit einer gemeinsamen Aufnahmeeinheit für das erste und das zweite Bild ist;
- Fig. 5: eine erfindungsgemäße Anzeige auf der Anzeigeeinheit darstellt;
- Fig. 6: eine weitere erfindungsgemäße Anzeige auf der Anzeigeeinheit darstellt;
- Fig. 7: eine weitere erfindungsgemäße Anzeige auf der Anzeigeeinheit darstellt;
- Fig. 8: eine beispielhafte Anzeige auf der Anzeigeeinheit darstellt;
- Fig. 9: eine weitere erfindungsgemäße Anzeige auf der Anzeigeeinheit darstellt;
- Fig. 10: eine weitere erfindungsgemäße Anzeige auf der Anzeigeeinheit darstellt;
- Fig. 11: eine beispielhafte Anzeige auf der Anzeigeeinheit darstellt;
- Fig. 12: eine weitere erfindungsgemäße Anzeige auf der Anzeigeeinheit darstellt;
- Fig. 13: eine weitere erfindungsgemäße Anzeige auf der Anzeigeeinheit darstellt;
- Fig. 14: eine weitere erfindungsgemäße Anzeige auf der Anzeigeeinheit darstellt;
- Fig. 15: eine weitere erfindungsgemäße Anzeige auf der Anzeigeeinheit darstellt;
- Fig. 16: eine weitere erfindungsgemäße Anzeige auf der Anzeigeeinheit darstellt;
- Fig. 17: eine weitere erfindungsgemäße Anzeige auf der Anzeigeeinheit darstellt;
- Fig. 18: eine weitere erfindungsgemäße Anzeige auf der Anzeigeeinheit darstellt;
- Fig. 19: eine beispielhafte erfindungsgemäße Anzeige auf der Anzeigeeinheit darstellt;
- Fig. 20: eine weitere erfindungsgemäße Anzeige auf der Anzeigeeinheit bei Geradeausfahrt darstellt; und
- Fig. 21: eine von der Anzeige der Fig. 20 ausgehende modifizierte Anzeige auf der Anzeigeeinheit bei einer Kurvenfahrt darstellt.

### Beschreibung bevorzugter Ausführungsformen

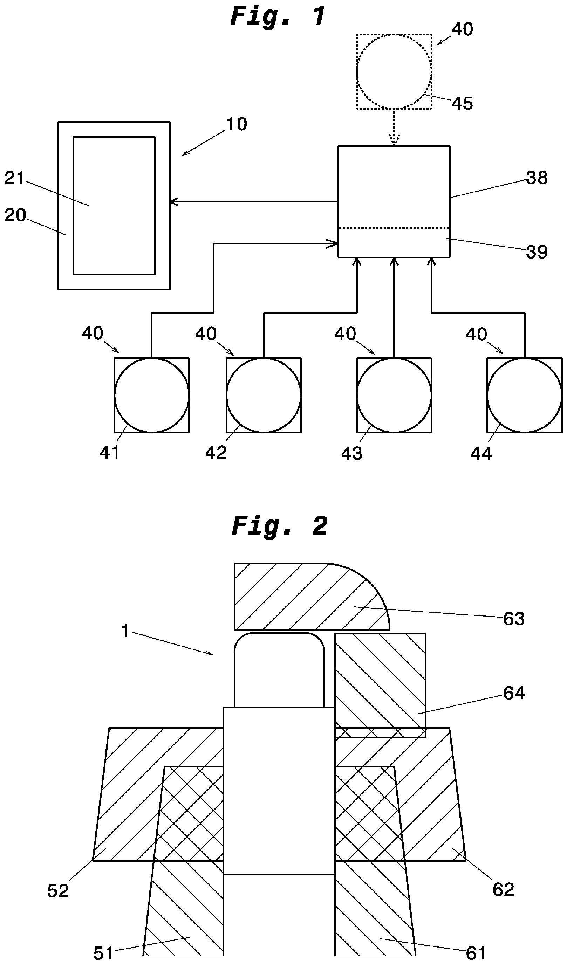

Fig. 1 zeigt ein erfindungsgemäßes Sichtsystem 10 für ein Nutzfahrzeug in schematischer Darstellung. Das Sichtsystem 10 enthält eine Anzeigeeinheit 20 für die Darstellung von gesetzlich vorgeschriebenen Sichtfeldern eines Hauptspiegels und eines Weitwinkelspiegels derselben Fahrzeugseite in einem Fahrerhaus des Nutzfahrzeugs. In der schematischen Darstellung von Fig. 1 ist die Position der Anzeigeeinheit 20 im Fahrerhaus des Nutzfahrzeugs nicht gezeigt.

Die Anzeigeeinheit 20 erhält Daten von einer Berechnungseinheit 38, welche wiederum mit Eingangsdaten von einer Erfassungseinheit 40 versorgt wird. Die Erfassungseinheit 40, die in einer Ausführungsform aus vier Aufnahmeeinheiten 41, 42, 43, 44, wie z. B. Kameras besteht, ist derart gestaltet, dass ein erstes Bild und ein zweites Bild, die unterschiedliche Bildwinkel haben, von den Aufnahmeeinheiten 41, 42 und mehrere weitere Bilder von den Aufnahmeeinheiten 43, 44 erzeugt werden. In der dargestellten Ausführungsform nimmt die erste Kamera bzw. Aufnahmeeinheit 41 ein erstes Bild auf, das das Sichtfeld des Hauptspiegels beinhaltet und vorzugsweise mit großer Auflösung und im wesentlichen unverzerrt aufgenommen wird, das heißt mit einem Bildwinkel, der dem Bildwinkel der natürlichen Wahrnehmung des Menschen entspricht, während die Kamera bzw. Aufnahmeeinheit 42 ein zweites Bild erzeugt, das zumindest eine Weitwinkelrichtung mit einem Bildwinkel größer als dem des natürlichen Eindrucks des Auges aufweist und das Sichtfeld eines Weitwinkelspiegels (Sichtfeld IV) abbildet. Zudem nimmt die dritte Kamera bzw. Aufnahmeeinheit 43 ein weiteres Bild auf, das z. B. das Sichtfeld des Frontspiegels beinhaltet, und die vierte Kamera bzw. Aufnahmeeinheit 44 nimmt ein weiteres Bild auf, das z. B. das Sichtfeld des Rampenspiegels beinhaltet. Statt der Kameras ist es auch denkbar, dass die Aufnahmeeinheiten 41, 42, 43, 44 durch verschiedene Bildsensoren oder Ähnliches gebildet werden.

Wird das erfindungsgemäße Sichtsystem auf beiden Seiten des Fahrzeugs angewendet, so sind (nicht dargestellt in Fig. 1) entsprechende zusätzliche Kameras oder andere Aufnahmeeinheiten sowie ggf. eine weitere, separate Anzeigeeinheit für die zweite Seite des Nutzfahrzeugs vorgesehen. Alternativ können die Bilder der jeweiligen Seiten des Nutzfahrzeugs auch auf einer gemeinsamen Anzeigeeinheit, z. B. getrennt durch eine Linie, dargestellt werden. Die Berechnungseinheit 38 kann nach Bedarf gemeinsam für beide Seiten des Fahrzeugs verwendet werden oder aber es wird auch eine separate Berechnungseinheit für jede Seite des Fahrzeugs vorgesehen.

In Fig. 1 ist ferner eine alternative Ausführungsform des erfindungsgemäßen Sichtsystems 10 durch gestrichelte Linien angedeutet. Statt der Aufnahmeeinheiten 41, 42, 43, 44, die die Erfassungseinheit 40 bilden, wird in diesem Fall die Erfassungseinheit 40 durch eine einzige, gemeinsame Aufnahmeeinheit 45 gebildet. Diese kann wiederum durch eine Kamera, einen Bildsensor oder Ähnliches ausgebildet sein. Die Aufnahmeeinheit 45 erfasst in diesem Fall ein Bild, das die mehreren Bilder mit dem ersten Bild, das das Sichtfeld des Hauptspiegels beinhaltet, und dem zweiten Bild, das das Sichtfeld des Weitwinkelspiegels beinhaltet, aufweist und somit vorzugsweise mit einer Weitwinkeleinrichtung aufgenommen ist, die einen großen Bildwinkel hat. Der Bildwinkel kann beispielsweise bis zu 180° sein, d. h. es kann beispielsweise ein Fischaugenobjektiv verwendet werden. Das gemeinsam durch die Aufnahmeeinheit 45 aufgenommene Bild wird dann einer Umwandlungseinheit 39 zugeführt, die in der in Fig. 1 dargestellten Ausführungsform in der Berechnungseinheit 38 integriert ist.

Alternativ könnte die Umwandlungseinheit 39 auch der Aufnahmeeinheit 45 beispielsweise zugeordnet sein, im Display, d.h. der Anzeigeeinheit 20, integriert sein, oder als getrennte Einrichtung, die zwischen der Aufnahmeeinheit 45 und Berechnungseinheit 38 geschaltet ist, vorgesehen sein.

Die Umwandlungseinheit 39 trennt durch Bildbearbeitung das aufgenommene Bild in das erste Bild, das zweite Bild und die weiteren mehreren Bilder, wobei das erste Bild vorzugsweise aus der Bildmitte des gemeinsam durch die Aufnahmeeinheit 45 aufgenommenen Bilds herausgeschnitten wird, da dieser Bereich im Wesentlichen unverzerrt ist und das gemeinsam aufgenommene Bild derart gerichtet ist, dass in dem in der Mitte des Bilds liegenden Bereich das Sichtfeld des Hauptspiegels abgebildet ist. Das zweite Bild wird dann beispielsweise unmittelbar angrenzend an das erste Bild aus dem gemeinsamen Bild herausgeschnitten und zwar derart, dass es den Bereich auf der dem Nutzfahrzeug abgewandten Seite angrenzend an das erste Bild abdeckt und eine gleiche Erstreckung in der Bildhöhenrichtung, d. h. der vertikalen Richtung entsprechend, hat. Die Bearbeitungseinheit 38 bearbeitet in dieser Ausführungsform in entsprechender Weise das erste und zweite Bild und führt das bearbeitete Bild als gemeinsames Bild der Anzeigeeinheit 20 zur Anzeige zu. Dabei kann das gesamte aufgenommene Bild in das erste Bild, das zweite Bild und die weiteren mehreren Bilder zerlegt werden, oder aber es kann derart sein, dass die Gesamtabdeckung der aufgenommenen Bilder größer als die des kombinierten Bildes ist, so dass ein Teil der aufgenommenen Bilder nicht verwendet wird.

Fig. 2 zeigt einen Teil der darzustellenden Sichtfelder um ein Nutzfahrzeug 1. Dies ist beispielsweise ein Sichtfeld 51 (Sichtfeld II) eines Hauptspiegels der linken Seite, ein Sichtfeld 52 (Sichtfeld IV) eines Weitwinkelspiegels der linken Seite, ein Sichtfeld 61 eines Hauptspiegels der rechten Seite und ein Sichtfeld 62 eines Hauptspiegels der rechten Seite. Zudem ist dies ein Sichtfeld 63 (Sichtfeld VI) eines Frontspiegels und ein Sichtfeld 64 (Sichtfeld V) eines Rampenspiegels. Natürlich kann das Sichtsystem für ein Nutzfahrzeug 1 auch nur auf einer Nutzfahrzeugseite eingesetzt werden, also beispielsweise das Sichtsystem 10 nur auf der schwerer einsehbaren Nutzfahrzeugseite, das heißt bei einer Fahrerposition auf der linken Seite, der rechten Seite des Nutzfahrzeugs, eingesetzt werden, indem nur die Sichtfelder 61, 62 der rechten Seite mittels eines Sichtsystems 10 auf einer Anzeigeeinheit 20 abgebildet werden, während beispielweise für die Fahrerseite, hier bei einer Fahrerposition auf der linken Nutzfahrzeugseite, gewöhnliche Mittel für indirekte Sicht, wie Spiegel, verwendet werden.

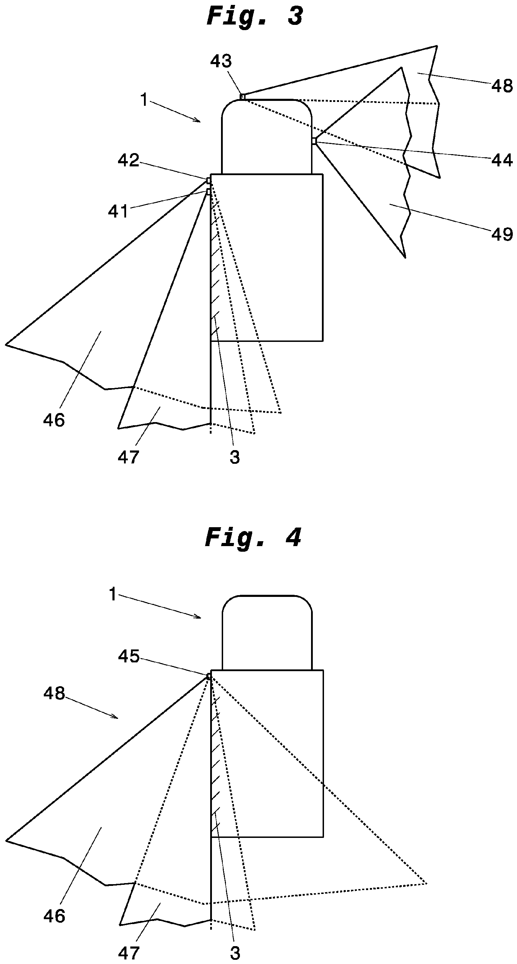

Fig. 3 und 4 zeigen schematisch die von den Aufnahmeeinheiten 41, 42, 43, 44, 45 aufgenommenen Bildwinkel.

In der Ausführungsform, in der für das erste bzw. zweite Bild getrennte Aufnahmeeinheiten 41, 42 vorgesehen sind (Fig. 3), ist die Kamera (Aufnahmeeinheit) 42 angepasst, ein zweites Bild zu erzeugen, das einen Bildwinkel aufweist, der größer ist als derjenige, der durch die Kamera (Aufnahmeeinheit) 41 aufgenommen wird. Dies ist schematisch in Fig. 3 durch die Sichtkegel 46 der zweiten Kamera 42 bzw. den Sichtkegel 47 der ersten Kamera 41 angedeutet. Wie in Fig. 3 erkennbar ist, können die Kameras 41, 42 vorzugsweise so angeordnet sein, dass sie einen Fahrzeugseitenbereich 3 miterfassen. Dabei ist es ausreichend, wenn eine der beiden Kameras 41, 42 entsprechend angeordnet ist. Dies ermöglicht es, einen Nutzfahrzeugseitenbereich 3 (in Fig. 3 ist das System beispielhaft für die linke Nutzfahrzeugseite dargestellt) aufzunehmen und in dem auf der Anzeigeeinheit 20 dargestellten, gemeinsamen Bild anzuzeigen. Der Nutzfahrzeugseitenbereich 3 ist in der Draufsicht aus Fig. 3 schematisch gezeigt. Zudem ist, wie in der Fig. 3 gezeigt, die Kamera (Aufnahmeeinheit) 43 angepasst, ein weiteres Bild zu erzeugen, das das Sichtfeld des Frontspiegels beinhaltet, und die Kamera (Aufnahmeeinheit) 44 ist angepasst, ein weiteres Bild zu erzeugen, das das Sichtfeld des Rampenspiegels erfasst. Die Kamera 43 erfasst dabei einen Sichtkegel 48 und die Kamera 44 erfasst einen Sichtkegel 49.

Fig. 4 zeigt alternativ eine Ausführungsform, bei der eine einzige Aufnahmeeinheit 45, wie z. B. eine Kamera, einen Sichtkegel 48 erfasst, der sowohl den (virtuellen) Sichtkegel 46 als auch den (virtuellen) Sichtkegel 47 beinhaltet. Der Sichtkegel 48 ist somit ein mit einem starken Weitwinkel aufgenommener Sichtkegel, bei dem, wie es in Fig. 4 schematisch angedeutet ist, der (virtuelle) Sichtkegel 47, der den Hauptspiegelsichtbereich abdecken soll, im Wesentlichen in der Bildmitte (Sichtkegelmitte) liegt. Der Nutzfahrzeugseitenbereich 3 wird ebenfalls mit abgebildet.

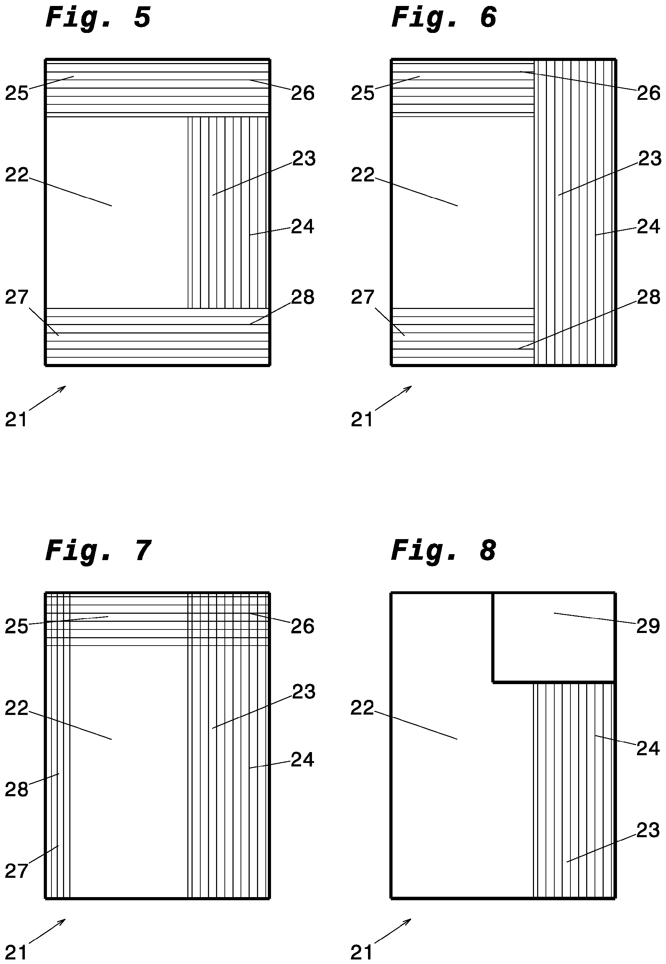

Fig. 5 bis 21 zeigen beispielhaft und schematisch mehrere Ausgestaltungen eines gemeinsamen Bilds 21, das auf der Anzeigeeinheit 20 dargestellt wird.

Das auf der Anzeigeeinheit 20 gezeigte gemeinsame Bild 21 der Fig. 5 beinhaltet ein erstes Bild 22, das von der ersten Kamera 41 und deren Sichtkegel 47 erzeugt wird bzw. aus dem gemeinsam durch die Aufnahmeeinheit 45 aufgenommenen Bild entsprechend dem Sichtkegel 48 herausgeschnitten ist, und zwar vorzugsweise aus dem weitgehend unverzerrten Teil des gemeinsam aufgenommenen Bilds, der sich in dessen Bildmitte befindet. Ferner beinhaltet das gemeinsame Bild 21 ein zweites Bild 23, das auf Basis des von z. B. der Kamera 42 erzeugten Bilds oder aus dem stärker bzw. deutlich verzerrten Teil des gemeinsam aufgenommenen Bilds entsprechend dem Sichtkegel 46 generiert ist, und zwar so, dass dessen dem Fahrzeug abgewandter Bereich mit einem Bildwinkel bzw. zumindest einer Verzerrung, die größer ist als die Verzerrung des ersten Bilds, verwendet wird. Dies bedeutet, dass das zweite Bild 23 grundsätzlich verzerrter ist als das Bild 22. Das erste Bild 22 und das zweite Bild 23 können außerdem von zwei unterschiedlichen Aufnahmeeinheiten 41, 42 erfasste Bilder darstellen.

Das gemeinsame Bild 21 der Fig. 5 enthält ferner ein weiteres Bild 25, das im oberen Bildbereich des gemeinsamen Bilds 21 angrenzend in Fahrzeuglängsrichtung an das erste Bild 22 und an das zweite Bild 23 angeordnet ist, und ein weiteres Bild 27, das im unteren Bildbereich des gemeinsamen Bilds 21 angrenzend in Fahrzeuglängsrichtung an das erste Bild 22 und das zweite Bild 23 angeordnet ist. Die Bilder 22, 23, 25, 27 bilden somit das gemeinsame Bild 21, die in der beispielhaften Ausführungsform der Fig. 5 alle eine gemeinsame Perspektive haben. Beispielsweise stellt das Bild 25 eine Horizontsicht nach hinten oder den Fahrzeugheckbereich dar und das Bild 27 stellt einen Nahbereich an einem Fahrzeugkabinenheckbereichs, beispielsweise die Radkästen, dar.

Die in Zeichnungen schraffierten Bereiche zeigen dass, die diese Bereiche der jeweiligen Bilder modifiziert sind. So sind die in der Fig. 5 gezeigten Bilder 23, 24, 25 schraffiert und zeigen damit an, dass die gesamten Bilder 23, 24, 25 jeweils modifiziert sind. So enthält das gemeinsame Bild 21 einen ersten Modifikationsbereich 24, in dem die Verzerrung des zweiten Bilds 23 wenig von der Verzerrung des ersten Bilds 22 abweicht und der gleichzeitig hinsichtlich seiner Erstreckung in Bildbreitenrichtung (Links-Rechts-Richtung in Fig. 5) ausgedünnt und damit verkürzt ist. Dies kann dadurch geschehen, dass in der Weitwinkelrichtung, welche in Fig. 5 zumindest eine Links-Rechts-Richtung ist, jede n-te Pixelreihe des zweiten Bilds 23 weggelassen wird.

Außerdem sind die Bilder 24, 25 in ihrer Bildlängsrichtung (Oben-Unten-Richtung in der Fig. 5) modifiziert, insbesondere ausgedünnt und verkürzt. So enthält das gemeinsame Bild 21 einen zweiten Modifikationsbereich 26, der im Bild 25 angeordnet ist. Das Bild 25 ist im zweiten Modifikationsbereich 26 in Längsrichtung, welche in Fig. 5 zumindest eine Oben-Unten-Richtung ist, beispielsweise derart modifiziert, dass jede n-te Pixelreihe des Bilds 25 weggelassen wird. In ähnlicher Weise enthält das gemeinsame Bild 21 einen weiteren zweiten Modifikationsbereich 28, der im Bild 27 angeordnet ist. Das Bild 27 ist im zweiten Modifikationsbereich 28 in Längsrichtung, welche in Fig. 5 zumindest eine Oben-Unten-Richtung ist, beispielsweise derart modifiziert, dass jede n-te Pixelreihe des Bilds 25 weggelassen wird.

Ferner sind, wie es in Fig. 5 erkennbar ist, die Bilder 22, 23, 25, 27 so zusammengesetzt, dass sowohl in Links-Rechts-Richtung als auch in Oben-Unten-Richtung im Wesentlichen die Bilder fluchten und so das gemeinsame Bild 21 darstellen.

Dadurch, dass die Bilder 23, 25, 27 entsprechend modifiziert werden, dass beispielsweise die Verzerrung des zweiten Bilds 23 an die des ersten Bilds 22 angenähert bleibt, ist es möglich, einen gleichmäßigen Übergang zwischen einem wenig verzerrten und einem stark verzerrten Bereich (von links nach rechts in Fig. 5) und einen gleichmäßigen Übergang zwischen einem wenig verzerrten und einem starkverzerrten Bereich (von oben nach unten in Fig. 5) herzustellen. Dies hat sich als ergonomisch sehr vorteilhaft für die Bedienung des Sichtsystems und die Orientierung für den Fahrer, insbesondere bezüglich möglicher Hindernisse, die im gemeinsamen Bild 21 dargestellt werden, erwiesen, insbesondere, wenn dennoch auf kleinem Raum der gesamte Sichtbereich des Weitwinkelspiegels dargestellt wird und das erste und zweite Bild durchgehend und kontinuierlich ineinander übergehend so zusammengesetzt sind, dass die Bilder in der Weitwinkelrichtung quasi nahtlos bleiben und auch entlang der Richtung senkrecht dazu, die der Fahrzeuglängsachsenrichtung entspricht, fluchten.

Bezüglich der Fig.5 sei angemerkt, dass sich der erste Modifikationsbereich 24 und die zweiten Modifikationsbereiche 26, 28 jeweils über das gesamte Bild 23, 25, 27 in der Weitwinkelrichtung bzw. in der Längsrichtung erstrecken. Es ist aber ausdrücklich festzuhalten, dass der erste Modifikationsbereich 24 und die zweiten Modifikationsbereiche 26, 28 nur teilweise das jeweilige Bild 23, 25, 27 abdecken können. So kann beispielsweise der erste Modifikationsbereich 24 in seiner Erstreckung in Weitwinkelrichtung geringer sein als die Erstreckung in Weitwinkelrichtung des entsprechenden zweiten Bilds 23, das zumindest den Teil des Sichtfelds des Weitwinkelspiegels beinhaltet. Gleiches gilt für die zweiten Modifikationsbereiche 26, 28, die in ihrer Erstreckung in Längsrichtung geringer sein können als die Erstreckung in Längsrichtung der entsprechenden Bilder 23, 25. Vorzugsweise grenzen der erste Modifikationsbereich 24 und die zweiten Modifikationsbereiche 26, 28 in ein an das jeweilige Bild angrenzende Bild.

In der beispielhaften Anzeige der Fig. 5 erstrecken sich die Bilder 25, 27 und auch die zweiten Modifikationsbereiche 26, 28 über die gesamte Breite des gemeinsamen Bilds 21, so dass die zweiten Modifikationsbereiche 26, 28 jeweils an die Bilder 22, 23 und den ersten Modifikationsbereich 24 in Längsrichtung angrenzen.

Die Fig. 6 zeigt ein weiteres Beispiel einer Anzeige auf der Anzeigeeinheit 20. In der beispielhaften Anzeige der Fig. 6 erstrecken sich die Bilder 25, 27 und auch die zweiten Modifikationsbereiche 26, 28 lediglich über die Breite des ersten Bilds 22, so dass die zweiten Modifikationsbereiche 26, 28 in der Längsrichtung des Nutzfahrzeug jeweils nur an das erste Bild 22 und in der Weitwinkelrichtung an den ersten Modifikationsbereich 24 angrenzen.

Die Fig. 7 zeigt ein weiteres Beispiel einer Anzeige auf der Anzeigeeinheit 20. Das gemeinsame Bild der Fig. 7 unterscheidet sich von dem gemeinsamen Bild 21 der Fig. 6 darin, dass das Bild 25 und der zweite Modifikationsbereich in einem Bildseitenbereich neben dem ersten Bild 22 liegen. Außerdem ist in der Fig. 7 dargestellt, dass sich sowohl der zweite Modifikationsbereich 26 und der zweite Modifikationsbereich 28 als auch der zweite Modifikationsbereich 26 und der erste Modifikationsbereich 24 zumindest teilweise überlappen.

Die Fig. 8 zeigt schematisch eine beispielhafte Anzeige eines gemeinsamen Bilds 21, in dem, bevorzugt an einer unkritischen Stelle, ein Bild 29, beispielsweise das von der Kamera (Aufnahmeeinheit) 43 oder 44 erfasste Bild, eingeblendet und dem Bild 22 und 23 zumindest teilweise überlagert ist. Das eingeblendete Bild 29 ist in dem Beispiel der Fig. 8 ohne einem Modifikationsbereich vorgesehen und steht mit den Bildern 22 und 23 nicht in direktem Bezug, d. h. dass das Bild 29 mit den Bildern 22 und 23 keine gemeinsame Perspektive hat.

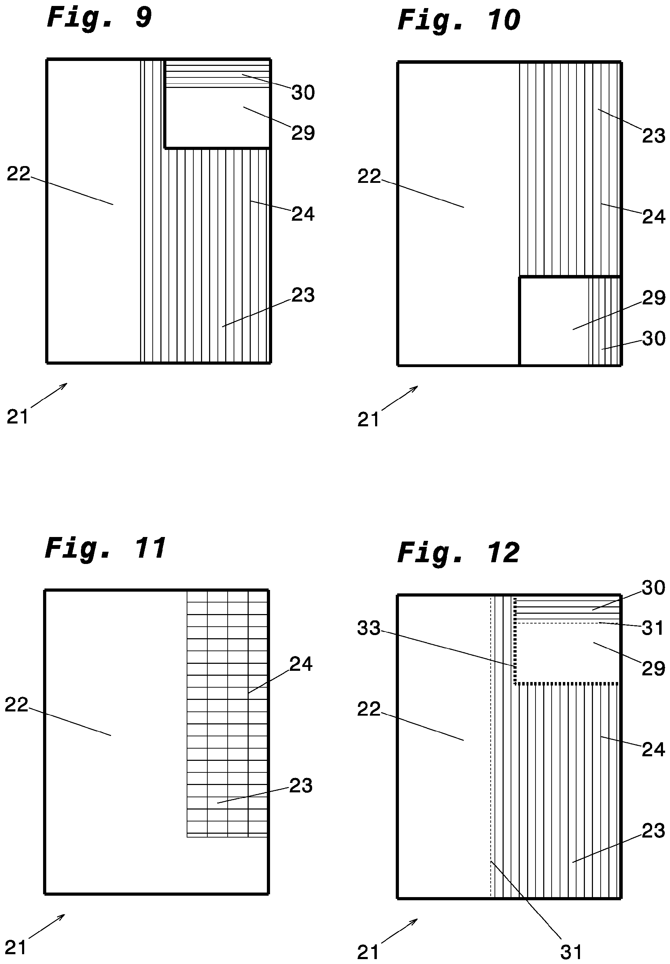

Die Fig. 9 zeigt eine der Fig. 8 ähnliche Ausführungsform der Anzeige des gemeinsamen Bilds 21, in dem das Bild 29 rechts oben eingeblendet ist. Gemäß der Fig. 9 ist das eingeblendete Bild 29 mit einem zweiten Modifikationsbereich 30 vorgesehen, der sich im Wesentlichen in einer Breitenrichtung des Bilds 29 (Links-Rechts-Richtung) erstreckt. Beispielsweise beinhaltet das Bild 29 zumindest einen Teil des Sichtfelds eines Frontspiegels (Sichtfeld VI).

Die Fig. 10 zeigt eine der Fig. 9 ähnliche Ausführungsform der Anzeige des gemeinsamen Bilds 21, in dem das Bild 29 rechts unten eingeblendet ist. Gemäß der Fig. 10 ist das eingeblendete Bild 29 mit einem zweiten Modifikationsbereich 30 vorgesehen, der sich im Wesentlichen in einer Längsrichtung des Bilds 29 (Oben-Unten-Richtung) erstreckt. Beispielsweise beinhaltet das Bild 29 zumindest einen Teil des Sichtfelds eines Rampenspiegels (Sichtfeld V). In manchen Ausführungsformen kann das gemeinsame Bild 21 sowohl das eingeblendete Bild 29 mit dem zweiten Modifikationsbereich 30 der Fig. 9 als auch das eingeblendete Bild 29 mit dem zweiten Modifikationsbereich 30 der Fig. 10 aufweisen.

In der Fig. 11 ist beispielhaft gezeigt, dass das zweite Bild 23 mittels dem ersten Modifikationsbereich 24 sowohl in Weitwinkelrichtung als auch in Längsrichtung des Nutzfahrzeugs modifiziert ist. Somit ist die Erstreckung des zweiten Bilds 23 in der Längsrichtung des Nutzfahrzeugs kleiner als die Gesamterstreckung des gemeinsamen Bilds 21 in dieser Richtung.

In den Fig. 5 bis 11 sind die Übergänge bzw. Grenzlinien zwischen Modifikationsbereichen 24, 26, 28, 30 und einem nicht modifizierten Bereich und die Übergänge bzw. Grenzlinien zwischen den mehreren Bildern 23, 25, 27, 29 nicht auf dem gemeinsamen Bild 21 mittels z. B. einer Linie angezeigt. D. h. dass die in den Fig. 5 bis 11 dargestellten Übergänge bzw. Grenzlinien für den Betrachter des gemeinsamen Bilds 21 nicht sichtbar sind.

Die Fig. 12 stellt eine der Fig. 9 ähnliche Ausgestaltung der Anzeige des gemeinsamen Bilds 21 dar, in der der Übergang zwischen dem ersten Modifikationsbereich 24 und einem nicht modifizierten Bereich durch eine gestrichelte Grenzlinie 31 angezeigt wird. Außerdem ist der Übergang zwischen dem Bild 29 und den Bildern 22 und 23 durch eine gestrichelte Grenzlinie 33 dargestellt. Ferner ist in der Fig. 12 gezeigt, dass der sich im Bild 29 befindende zweite Modifikationsbereich 30 durch eine weitere gestrichelte Grenzlinie 31 angedeutet ist. In gleicher Weise kann das erste Bild 22 vom zweiten Bild 23 durch eine gestrichelte Grenzlinie angezeigt werden, die in dem in der Fig. 12 gezeigten Beispiel mit der Grenzlinie 31 zusammenfällt. Anstelle von gestrichelten Grenzlinien 31, 33 können durchgezogene Linien, gepunktete Linien, Strich-Punkt-Linien oder jegliche andere Darstellungsformen für die Linien verwendet werden, um die Modifikationsbereiche bzw. Bilder von den angrenzenden nicht modifizierten Bereichen bzw. angrenzenden Bildern optisch abzutrennen.

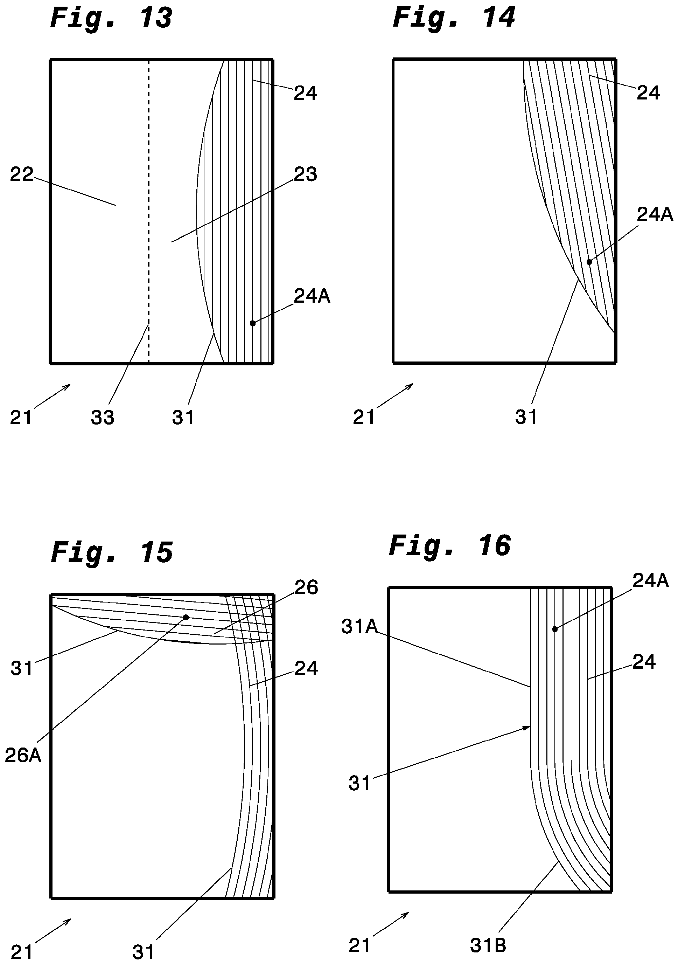

Die Fig. 13 bis 18 stellen weitere Beispiele für Anzeigen dar, in denen die Grenzlinien 31, für den Betrachter sichtbar oder unsichtbar, zwischen den Modifikationsbereichen und den nicht modifizierten Bereich eine nicht-lineare Funktion bzw. eine nicht-konstante, lineare Funktion beschreiben.

In der Fig. 13 ist dargestellt, dass die Grenzlinie 31 zwischen ersten Modifikationsbereich und dem nicht modifizierten Bereich des zweiten Bilds 23 bogenförmig ist. In diesem Beispiel ist Grenzlinie 33 zwischen dem ersten Bild 22 und dem zweiten Bild 23 als konstante, lineare Funktion dargestellt, wobei die Grenzlinie in weiteren Ausgestaltungen nicht-linear oder nicht-konstant, linear sein kann. Insbesondere ist der erste Modifikationsbereich 24 in der Anzeige der Fig. 13 im Wesentlichen konvex ausgestaltet.

In der Fig. 13 ist ferner zu erkennen, dass der Modifikationsbereich 24 eine Vielzahl von Modifikationslinien 24A aufweist, entlang derer die Modifikation des jeweiligen Bilds vorgenommen wird. Die Modifikationslinien 24A erstrecken sich in dem dargestellten Beispiel parallel zur Fahrzeuglängsachse und verlaufen somit nicht parallel zur Grenzlinie 31.

In der Fig. 14 ist gezeigt, dass sich die Grenzlinie 31 nicht vollständig von der oberen Begrenzung des gemeinsamen Bilds 21 bis zu der unteren Begrenzung des gemeinsamen Bilds 21, wie es in der Fig. 13 der Fall ist, erstreckt, sondern die Grenzlinie 31 bogenförmig ausgebildet ist und sich von der oberen Begrenzung des gemeinsamen Bilds 21 zu einer Seitenbegrenzung des gemeinsamen Bilds 21 erstreckt. Die Modifikationslinien 24A des in der Fig. 14 dargestellten gemeinsamen Bilds 21 beschreiben jeweils eine nicht konstante, lineare Funktion und verlaufen nicht parallel zur Grenzlinie 31.

In der Fig. 15 ist der erste Modifikationsbereich 24 im Wesentlichen konkav ausgestaltet und es ist ein zweiter Modifikationsbereich 26 vorgesehen, der sich im Wesentlichen in einer Weitwinkelrichtung erstreckt und mit dem ersten Modifikationsbereich 24 zumindest teilweise überlappt. Die Grenzlinie 31 des zweiten Modifikationsbereichs 26 ist bogenförmig, so dass der zweite Modifikationsbereich 26 im Wesentlichen konvex ausgebildet ist. Die Modifikationslinien 26A des zweiten Modifikationsbereichs 26 der Fig. 15 beschreiben eine nicht konstante, lineare Funktion und verlaufen im Wesentlichen in der Weitwinkelrichtung des zweiten Bilds 23.

In der Fig. 16 ist eine weitere beispielhafte Ausgestaltung der Anzeige 20 gezeigt. In der Fig. 16 weist der zweite Modifikationsbereich 24 eine Grenzlinie 31 auf, die aus einem linearen, konstanten Abschnitt 31A und einem daran anschließenden nicht-linearen Abschnitt 31B gebildet ist. Der lineare, konstante Abschnitt 31A erstreckt sich in dem Beispiel der Fig. 16 von der oben Begrenzung des gemeinsamen Bilds 21 in einen Mittelbereich des gemeinsamen Bilds 21, wo er in den bogenförmigen Abschnitt 31B übergeht, der sich bis zur unteren Begrenzung des gemeinsamen Bilds 21 erstreckt. In der Fig. 16 ist gezeigt, dass die Modifikationslinien 24A parallel zur Grenzlinie 31 verlaufen.

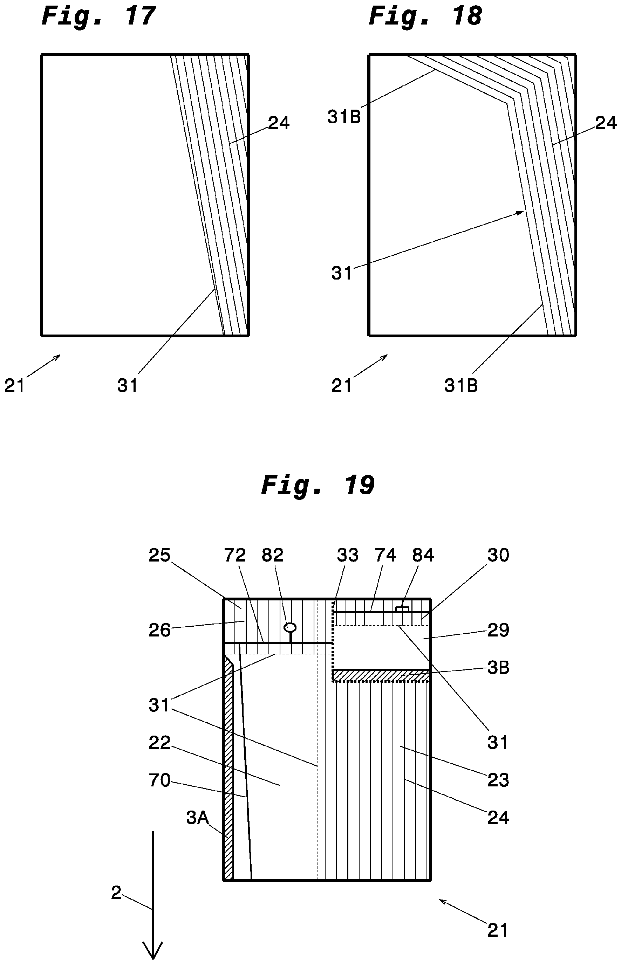

In den Fig. 17 und 18 sind weitere beispielhafte Anzeigen 20 dargestellt, in denen die jeweiligen Grenzlinien 31 des ersten Modifikationsbereichs 24 eine nicht konstante, lineare Funktion beschreiben. In der Fig. 17 erstreckt sich die Grenzlinie 31 des ersten Modifikationsbereichs 24 von der oberen Begrenzung des gemeinsamen Bilds 21 schräg zur unteren Begrenzung des gemeinsamen Bilds 21. In der Fig. 18 ist die Grenzlinie 31 des ersten Modifikationsbereichs 24 aus einem ersten linearen Abschnitt 31A und einem zweiten linearen Abschnitt 31B gebildet, die sich jeweils schräg erstrecken.

In der Fig. 19 ist ein beispielhaftes gemeinsames Bild 21 gezeigt, das aus den Bildern 22, 23, 25 und 29 gebildet ist, wobei das Bild 29 das zweite Bild 23 zumindest teilweise überlagert. In der Fig. 19 zeigt der Pfeil 2 die Vorwärtsfahrtrichtung des Nutzfahrzeugs an. Das zweite Bild 23 weist einen zweiten Modifikationsbereich 24 auf, das Bild 25 weist einen weiteren Modifikationsbereich 26 und das Bild 29 weist einen weiteren Modifikationsbereich 30 auf. Im Bild 25 ist ferner der hintere Horizont 72 und ein Objekt 82, beispielsweise ein Baum, abgebildet. Das das Bild 25 überlagernde Bild 29, das in dem dargestellten Beispiel das Sichtfeld eines Frontspiegels beinhaltet, weist den vorderen Horizont 74 und ein Objekt 84, beispielsweise ein Gebäude, auf. Im gezeigten Beispiel der Fig. 19 erstreckt sich der zweite Modifikationsbereich 26 über das gesamte Bild 25 in Weitwinkelrichtung und in Längsrichtung und der zweite Modifikationsbereich 30 erstreckt sich in Weitwinkelrichtung über die gesamte Breite des Bilds 29 und nur teilweise in Längsrichtung.

Wie es in Fig. 19 ferner erkennbar ist, ist ein Nutzfahrzeugseitenbereich 3A und ein Nutzfahrzeugfrontbereich 3B in das gemeinsame Bild 21 eingeblendet. Insbesondere ist der Nutzfahrzeugseitenbereich 3A im ersten Bild 22 und der Nutzfahrzeugfrontbereich 3B im Bild 29 zu sehen. Auch dies ermöglicht es, die Orientierung für den Fahrer zu vereinfachen. Zur weiteren verbesserten Orientierung ist im ersten Bild 22 eine Anzeige der Fahrbahnbegrenzung 70, beispielsweise in der Form einer durchgezogenen Linie, enthalten.

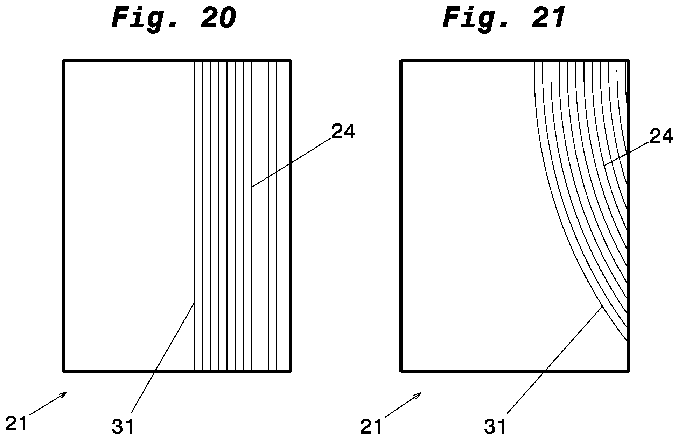

Unter Verweis auf die Fig. 20 und 21 ist beispielhaft die Anpassung des gemeinsamen Bilds 21 während verschiedenen Fahrsituationen gezeigt. Die Fig. 20 zeigt dabei beispielhaft ein gemeinsames Bild 21 während einer Geradeausfahrt des Nutzfahrzeugs, wobei die Fig. 21 beispielhaft ein gemeinsames Bild 21 während einer Kurvenfahrt, z. B. während einer Rechtskurve, zeigt. Bei der Kurvenfahrt kann die Grenzlinie 31 des Modifikationsbereichs 24 mit dem linearen und konstanten Verlauf in der Fig. 20 zu einem nicht-linearen Verlauf in der Fig. 21 modifiziert werden, um das Sichtfeld in diesem Bereich kurzzeitig zu erweitern. Die Anpassung des Verlaufs der Grenzlinie 31 kann auch in Abhängigkeit anderer Fahrzeugparameter erfolgen, wie beispielsweise der Geschwindigkeit. In weiteren Beispielen kann die Anpassung des Verlaufs der Grenzlinie 31 auch manuell vom Fahrer des Nutzfahrzeugs erfolgen.

### Aspekte

1. Sichtsystem (10) für ein Nutzfahrzeug (1) zur Darstellung von gesetzlich vorgeschriebenen Sichtfeldern (51, 52, 61, 62) eines Hauptspiegels und eines Weitwinkelspiegels derselben Fahrzeugseite in einem Fahrerhaus des Nutzfahrzeugs (1), enthaltend
   eine Anzeigeeinheit (20) im Fahrerhaus;
   eine Erfassungseinheit (40, 41, 42, 43, 44, 45); und
   eine Berechnungseinheit (38), die von der Erfassungseinheit (40, 41, 42, 43, 44, 45) erfasste Bilder verarbeitet und zur Anzeige an die Anzeigeeinheit (20) zuführt,
   wobei die Erfassungseinheit (40, 41, 42, 43, 44, 45) angepasst ist, mehrere Bilder mit mindestens einem ersten Bild (22), das das Sichtfeld des Hauptspiegels beinhaltet, und einem zweiten Bild (23), das zumindest den Teil des Sichtfelds des Weitwinkelspiegels beinhaltet, der nicht Teil des Sichtfelds des Hauptspiegels ist, zu erfassen,
   wobei die Berechnungseinheit (38) angepasst ist, die mehreren Bilder derart zu einem gemeinsamen Bild (21) nahtlos unmittelbar aneinander angrenzend zusammenzusetzen, dass das erste Bild (22) und das zweite Bild (23) eine gemeinsame Perspektive haben,
   wobei die Darstellungen des ersten Bilds (22) und des zweiten Bilds (23) in der Längsrichtung des Nutzfahrzeugs senkrecht zur Weitwinkelrichtung fluchten,
   zumindest das zweite Bild (23) in zumindest einer Weitwinkelrichtung, die im Wesentlichen senkrecht zur Bildblickrichtung und horizontal ist, einen Weitwinkelbildwinkel hat, der größer ist als es dem natürlichen Eindruck des menschlichen Auges entspricht, und damit verzerrt ist, und das erste Bild (22) in der Weitwinkelrichtung des zweiten Bilds (23) im Wesentlichen unverzerrt ist,
   wobei zumindest das zweite Bild (23) zumindest in einem ersten Modifikationsbereich (24) in der Weitwinkelrichtung modifiziert ist, dass die Bilderstreckung in der Weitwinkelrichtung verringert ist,
   wobei eine Grenzlinie (31) zwischen einem Modifikationsbereich (24, 26, 28, 30) und einem nicht modifizierten Bereich eine nicht-lineare Funktion beschreibt, die vorzugsweise bogenförmig ist, oder
   wobei eine Grenzlinie (31) zwischen einem Modifikationsbereich (24, 26, 28, 30) und einem nicht modifizierten Bereich eine nicht konstante, lineare Funktion beschreibt.
2. Sichtsystem nach Aspekt 1, wobei das gemeinsame Bild (21) zumindest einen zweiten Modifikationsbereich (24, 26, 28, 30), der von dem ersten Modifikationsbereich (24) verschieden ist, aufweist, in dem zumindest eins der mehreren Bilder in der Längsrichtung des Nutzfahrzeugs und/oder einer Weitwinkelrichtung der mehreren Bilder derart modifiziert ist, dass dessen Bilderstreckung in dieser Richtung verringert ist.
3. Sichtsystem (10) für ein Nutzfahrzeug (1) zur Darstellung von gesetzlich vorgeschriebenen Sichtfeldern (51, 52, 61, 62) eines Hauptspiegels und eines Weitwinkelspiegels derselben Fahrzeugseite in einem Fahrerhaus des Nutzfahrzeugs (1), enthaltend:
   eine Anzeigeeinheit (20) im Fahrerhaus;
   eine Erfassungseinheit (40, 41, 42, 43, 44, 45); und
   eine Berechnungseinheit (38), die von der Erfassungseinheit (40, 41, 42, 43, 44, 45) erfasste Bilder verarbeitet und zur Anzeige an die Anzeigeeinheit (20) zuführt,
   wobei die Erfassungseinheit (40, 41, 42, 43, 44, 45) angepasst ist, mehrere Bilder mit mindestens einem ersten Bild (22), das das Sichtfeld des Hauptspiegels beinhaltet, und einem zweiten Bild (23), das zumindest den Teil des Sichtfelds des Weitwinkelspiegels beinhaltet, der nicht Teil des Sichtfelds des Hauptspiegels ist, zu erfassen,
   wobei die Berechnungseinheit (38) angepasst ist, die mehreren Bilder derart zu einem gemeinsamen Bild (21) nahtlos unmittelbar aneinander angrenzend zusammenzusetzen, dass das erste Bild (22) und das zweite Bild (23) eine gemeinsame Perspektive haben, wobei die Darstellungen des ersten Bilds (22) und des zweiten Bilds (23) in der Längsrichtung des Nutzfahrzeugs senkrecht zur Weitwinkelrichtung fluchten;
   wobei zumindest das zweite Bild (23) in zumindest einer Weitwinkelrichtung, die im Wesentlichen senkrecht zur Bildblickrichtung und horizontal ist, einen Weitwinkelbildwinkel hat, der größer ist als es dem natürlichen Eindruck des menschlichen Auges entspricht, und damit verzerrt ist, und das erste Bild (22) in der Weitwinkelrichtung des zweiten Bilds im Wesentlichen unverzerrt ist,
   wobei zumindest das zweite Bild (23) zumindest in einem ersten Modifikationsbereich (24) in der Weitwinkelrichtung modifiziert ist, dass die Bilderstreckung in der Weitwinkelrichtung verringert ist, und
   wobei das gemeinsame Bild (21) zumindest einen zweiten Modifikationsbereich (26, 28, 30), der von dem ersten Modifikationsbereich (24) verschieden ist, aufweist, in dem zumindest eins der mehreren Bilder in der Längsrichtung des Nutzfahrzeugs und/oder einer Weitwinkelrichtung der mehreren Bilder derart modifiziert ist, dass dessen Bilderstreckung in dieser Richtung verringert ist.
4. Sichtsystem (10) nach Aspekt 3,
   wobei eine Grenzlinie (31) zwischen einem Modifikationsbereich (24, 26, 28, 30) und einem nicht modifizierten Bereich eine nicht-lineare Funktion beschreibt, die vorzugsweise bogenförmig ist, oder
   wobei eine Grenzlinie (31) zwischen einem Modifikationsbereich (24, 26, 28, 30) und einem nicht modifizierten Bereich eine nicht konstante, lineare Funktion beschreibt.
5. Sichtsystem (10) nach Aspekt 1 oder 4,
   wobei eine Grenzlinie (33) zwischen zwei der mehreren Bilder, vorzugsweise zwischen dem ersten Bild (22) und dem zweiten Bild (23), eine nicht-lineare Funktion beschreibt, die vorzugsweise bogenförmig ist, oder
   wobei eine Grenzlinie (33) zwischen zwei der mehreren Bilder eine nicht konstante, lineare Funktion beschreibt,
   wobei bevorzugt die Grenzlinie (31) zwischen einem Modifikationsbereich (24, 26, 28, 30) und einem nicht modifizierten Bereich mit der Grenzlinie (33) zwischen den zwei der mehreren Bilder zusammenfällt.
6. Sichtsystem (10) nach einem der vorhergehenden Aspekte, wobei die Berechnungseinheit (38) angepasst ist, alle die mehreren Bilder derart zum gemeinsamen Bild (21) nahtlos unmittelbar aneinander angrenzend zusammenzusetzen, dass alle die mehreren Bilder eine gemeinsame Perspektive haben.
7. Sichtsystem (10) nach einem der vorhergehenden Aspekte, wobei die Erfassungseinheit (40, 41, 42, 43, 44, 45) für zumindest zwei der mehreren Bilder eine getrennte Aufnahmeeinheit (41, 42, 43, 44) aufweist.
8. Sichtsystem (10) nach einem der Aspekte 1 bis 6, wobei die Erfassungseinheit (40, 41, 42, 43, 44, 45) eine gemeinsame Aufnahmeeinheit (45) zum Aufnehmen eines Bilds, das zumindest zwei der mehreren Bilder beinhaltet, aufweist.
9. Sichtsystem (10) nach Aspekt 8, wobei zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an das erste Bild (22) und angrenzend in Längsrichtung des Nutzfahrzeugs an das zweite Bild (23) liegt und an den ersten Modifikationsbereich (24) in Längsrichtung des Nutzfahrzeugs angrenzt.
10. Sichtsystem (10) nach einem der Aspekte 8 und 9, wobei zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an nur das erste Bild (22) liegt und in Weitwinkelrichtung des zweiten Bilds (23) an den ersten Modifikationsbereich (24) angrenzt.
11. Sichtsystem (10) nach einem der Aspekte 8 bis 10, wobei zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an nur das erste Bild (22) liegt und den zweiten Modifikationsbereich (24) zumindest teilweise überlappt.
12. Sichtsystem (10) nach einem der Aspekte 8 bis 11, wobei zumindest ein zweiter Modifikationsbereich (28) angrenzend in Weitwinkelrichtung des zweiten Bilds (23) an nur das erste Bild (22) und in der Nähe des Fahrzeugs liegt.
13. Sichtsystem (10) nach einem der Aspekte 1 bis 5, wobei die Berechnungseinheit (38) ferner angepasst ist, mindestens eins der mehreren Bilder dem gemeinsamen Bild (21), in dem das mindestens erste Bild (22) und das zweite Bild (23) nahtlos unmittelbar aneinander grenzend zusammengesetzt sind, zu überlagern.
14. Sichtsystem (10) nach Aspekt 13, wobei sich der zweite Modifikationsbereich (30) in dem mindestens einen der mehreren Bilder, das das gemeinsame Bild (21) überlagert, befindet.
15. Sichtsystem (10) nach einem der Aspekte 13 und 14, wobei die Berechnungseinheit (38) ferner angepasst ist, mindestens eins der mehreren Bilder dem gemeinsamen Bild (21), in dem das mindestens erste Bild (22) und das zweite Bild (23) nahtlos unmittelbar aneinander grenzend zusammengesetzt ist, zu überlagern, wenn das Nutzfahrzeug einen vorbestimmten Fahrzustand aufweist.
16. Sichtsystem (10) nach einem der vorhergehenden Aspekte, wobei das gemeinsame Bild (21) ferner sichtbare Grenzlinien (33) aufweist, die die Modifikationsbereiche (24, 26, 28, 30) voneinander optisch trennt.
17. Sichtsystem (10) nach einem der vorhergehenden Aspekte, wobei mindestens eins der mehreren Bilder einen Nutzfahrzeugseitenbereich (3A) und/oder einen Nutzfahrzeugfrontbereich (3B) beinhaltet und die Berechnungseinheit (38) die mehreren Bilder derart zusammensetzt, dass der Nutzfahrzeugseitenbereich (3A) und/oder der Nutzfahrzeugfrontbereich (3B) im gemeinsamen Bild (21) gezeigt werden/wird.
18. Sichtsystem (10) nach einem der vorhergehenden Aspekte, wobei die Berechnungseinheit (38) zumindest einen der Modifikationsbereiche (24, 26, 28, 30) durch Weglassen jeder n-ten Pixelreihe in der Weitwinkelrichtung und/oder in der Längsrichtung ausdünnt, wobei n ≥ 2, und/oder durch Stehenlassen jeder k-ten Pixelreihe in der Weitwinkelrichtung ausdünnt, wobei k ≥ 2.
19. Sichtsystem (10) nach Aspekt 18, wobei das Weglassen jeder n-ten Pixelreihe oder das Stehenlassen jeder k-ten Pixelreihe in der gesamten Erstreckung des jeweiligen Bilds in Weitwinkelrichtung und/oder in Längsrichtung gleichmäßig erfolgt.
20. Sichtsystem (10) nach einem der Aspekte 1 bis 18, wobei die Berechnungseinheit (38) zumindest einen der Modifikationsbereich (24, 26, 28, 30) durch Weglassen von Pixelreihen in der Weitwinkelrichtung und/oder in der Längsrichtung ausdünnt, wobei die Anzahl der weggelassenen Pixelreihen mit zunehmender Entfernung vom Fahrzeug zunimmt, vorzugsweise gleichmäßig zunimmt.
21. Sichtsystem (10) nach einem der Aspekte 18 oder 20, wobei das Ausdünnen im ersten Modifikationsbereich (24) nur bezüglich der Weitwinkelrichtung und/oder in einem der zweiten Modifikationsbereiche (26, 28, 30) nur bezüglich der Längsrichtung erfolgt.
22. Sichtsystem (10) nach Aspekt 20, wobei das Ausdünnen über die gesamte Erstreckung des jeweiligen Bilds bezüglich der Weitwinkelrichtung und/oder bezüglich der Längsrichtung gleichmäßig zunehmend mit zunehmender Entfernung vom Fahrzeug erfolgt.
23. Sichtsystem (10) nach einem der vorhergehenden Aspekte, wobei eins der mehreren Bilder das Sichtfeld eines Rampenspiegels (Sichtfeld V) beinhaltet und/oder wobei eins der mehreren Bilder das Sichtfeld eines Frontspiegels (Sichtfeld VI) beinhaltet.
24. Sichtsystem (10) für ein Nutzfahrzeug (1) zur Darstellung von gesetzlich vorgeschriebenen Sichtfeldern (51, 52, 61, 62) eines Hauptspiegels und eines Weitwinkelspiegels derselben Fahrzeugseite in einem Fahrerhaus des Nutzfahrzeugs (1), enthaltend
   eine Anzeigeeinheit (20) im Fahrerhaus;
   eine Erfassungseinheit (40, 41, 42, 43, 44, 45); und
   eine Berechnungseinheit (38), die von der Erfassungseinheit (40, 41, 42, 43, 44, 45) erfasste Bilder verarbeitet und zur Anzeige an die Anzeigeeinheit (20) zuführt,
   wobei die Erfassungseinheit (40, 41, 42, 43, 44, 45) angepasst ist, mehrere Bilder mit mindestens einem ersten Bild (22), das das Sichtfeld des Hauptspiegels beinhaltet, und einem zweiten Bild (23), das zumindest den Teil des Sichtfelds des Weitwinkelspiegels beinhaltet, der nicht Teil des Sichtfelds des Hauptspiegels ist, zu erfassen,
   wobei die Berechnungseinheit (38) angepasst ist, das erste Bild (22) und das zweite Bild (23) derart zu einem gemeinsamen Bild (21) nahtlos unmittelbar aneinander angrenzend zusammenzusetzen, dass das erste Bild (22) und das zweite Bild (23) eine gemeinsame Perspektive haben, und
   wobei die Darstellungen des ersten Bilds (22) und des zweiten Bilds (23) in der Längsrichtung des Nutzfahrzeugs senkrecht zur Weitwinkelrichtung fluchten,
   zumindest das zweite Bild (23) in zumindest einer Weitwinkelrichtung, die im Wesentlichen senkrecht zur Bildblickrichtung und horizontal ist, einen Weitwinkelbildwinkel hat, der größer ist als es dem natürlichen Eindruck des menschlichen Auges entspricht, und damit verzerrt ist, und das erste Bild (22) in der Weitwinkelrichtung des zweiten Bilds im Wesentlichen unverzerrt ist,
   wobei zumindest das zweite Bild (23) zumindest in einem Modifikationsbereich (24) in der Weitwinkelrichtung modifiziert ist, dass die Bilderstreckung in der Weitwinkelrichtung verringert ist, und
   wobei die Berechnungseinheit (38) ferner angepasst ist, zumindest eins der mehreren Bilder, das nicht das erste Bild (22) und das zweite Bild (23) ist, im gemeinsamen Bild (21) zu überlagen.

Die oben beschriebenen bevorzugten Ausführungsformen sind auch auf die Aspekte anwendbar.

### Bezugszeichenliste

- 1: Nutzfahrzeug
- 2: Vorwärtsfahrtrichtung
- 3A: Nutzfahrzeugseitenbereich
- 3B: Nutzfahrzeugfrontbereich
- 10: Sichtsystem
- 20: Anzeigeeinheit
- 21: gemeinsames Bild
- 22: erstes Bild
- 23: zweites Bild
- 24: erster Modifikationsbereich
- 24A: Modifikationslinie
- 25: Bild
- 26: zweiter Modifikationsbereich
- 26A: Modifikationslinie
- 27: Bild
- 28: zweiter Modifikationsbereich
- 29: Bild
- 30: zweiter Modifikationsbereich
- 31: Grenzlinie
- 31A: erster Abschnitt (der Grenzlinie)
- 31B: zweiter Abschnitt (der Grenzlinie)
- 33: Grenzlinie
- 38: Berechnungseinheit
- 39: Umwandlungseinheit
- 40: Erfassungseinheit
- 41: Aufnahmeeinheit
- 42: Aufnahmeeinheit
- 43: Aufnahmeeinheit
- 44: Aufnahmeeinheit
- 45: Aufnahmeeinheit
- 46: Sichtkegel
- 47: Sichtkegel
- 48: Sichtkegel
- 49: Sichtkegel
- 51: Sichtfeld
- 52: Sichtfeld
- 61: Sichtfeld
- 62: Sichtfeld
- 63: Sichtfeld
- 64: Sichtfeld
- 70: Fahrbahnbegrenzung
- 72: hinterer Horizont
- 74: vorderer Horizont
- 82: Objekt
- 84: Objekt

## Patentansprüche

1. Sichtsystem (10) für ein Nutzfahrzeug (1) zur Darstellung von gesetzlich vorgeschriebenen Sichtfeldern (51, 52, 61, 62) eines Hauptspiegels und eines Weitwinkelspiegels derselben Fahrzeugseite in einem Fahrerhaus des Nutzfahrzeugs (1), enthaltend
eine Anzeigeeinheit (20) im Fahrerhaus;
eine Erfassungseinheit (40, 41, 42, 43, 44, 45); und
eine Berechnungseinheit (38), die von der Erfassungseinheit (40, 41, 42, 43, 44, 45) erfasste Bilder verarbeitet und zur Anzeige an die Anzeigeeinheit (20) zuführt,
wobei die Erfassungseinheit (40, 41, 42, 43, 44, 45) angepasst ist, mehrere Bilder mit mindestens einem ersten Bild (22), das das Sichtfeld des Hauptspiegels beinhaltet, und einem zweiten Bild (23), das zumindest den Teil des Sichtfelds des Weitwinkelspiegels beinhaltet, der nicht Teil des Sichtfelds des Hauptspiegels ist, zu erfassen,
wobei die Berechnungseinheit (38) angepasst ist, die mehreren Bilder derart zu einem gemeinsamen Bild (21) nahtlos unmittelbar aneinander angrenzend zusammenzusetzen, dass das erste Bild (22) und das zweite Bild (23) eine gemeinsame Perspektive haben,
wobei die Darstellungen des ersten Bilds (22) und des zweiten Bilds (23) in der Längsrichtung des Nutzfahrzeugs senkrecht zur Weitwinkelrichtung fluchten,
zumindest das zweite Bild (23) in zumindest einer Weitwinkelrichtung, die im Wesentlichen senkrecht zur Bildblickrichtung und horizontal ist, einen Weitwinkelbildwinkel hat, der größer ist als es dem natürlichen Eindruck des menschlichen Auges entspricht, und damit verzerrt ist, und das erste Bild (22) in der Weitwinkelrichtung des zweiten Bilds (23) im Wesentlichen unverzerrt ist,
wobei zumindest das zweite Bild (23) zumindest in einem ersten Modifikationsbereich (24) in der Weitwinkelrichtung modifiziert ist, dass die Bilderstreckung in der Weitwinkelrichtung verringert ist, **dadurch gekennzeichnet, dass** eine Grenzlinie (31) zwischen einem Modifikationsbereich (24, 26, 28, 30) und einem nicht modifizierten Bereich durch eine nicht-lineare Funktion beschrieben wird, die vorzugsweise bogenförmig ist, oder dass eine Grenzlinie (31) zwischen einem Modifikationsbereich (24, 26, 28, 30) und einem nicht modifizierten Bereich durch eine nicht konstante, lineare Funktion beschrieben wird.

2. Sichtsystem nach Anspruch 1, wobei das gemeinsame Bild (21) zumindest einen zweiten Modifikationsbereich (24, 26, 28, 30), der von dem ersten Modifikationsbereich (24) verschieden ist, aufweist, in dem zumindest eins der mehreren Bilder in der Längsrichtung des Nutzfahrzeugs und/oder einer Weitwinkelrichtung der mehreren Bilder derart modifiziert ist, dass dessen Bilderstreckung in dieser Richtung verringert ist.

3. Sichtsystem (10) nach Anspruch 1,
wobei eine Grenzlinie (33) zwischen zwei der mehreren Bilder, vorzugsweise zwischen dem ersten Bild (22) und dem zweiten Bild (23), durch eine nicht-lineare Funktion beschrieben wird, die vorzugsweise bogenförmig ist, oder
wobei eine Grenzlinie (33) zwischen zwei der mehreren Bilder durch eine nicht konstante, lineare Funktion beschrieben wird,
wobei bevorzugt die Grenzlinie (31) zwischen einem Modifikationsbereich (24, 26, 28, 30) und einem nicht modifizierten Bereich mit der Grenzlinie (33) zwischen den zwei der mehreren Bilder zusammenfällt.

4. Sichtsystem (10) nach einem der vorhergehenden Ansprüche, wobei die Berechnungseinheit (38) angepasst ist, alle die mehreren Bilder derart zum gemeinsamen Bild (21) nahtlos unmittelbar aneinander angrenzend zusammenzusetzen, dass alle die mehreren Bilder eine gemeinsame Perspektive haben.

5. Sichtsystem (10) nach einem der vorhergehenden Ansprüche, wobei die Erfassungseinheit (40, 41, 42, 43, 44, 45) für zumindest zwei der mehreren Bilder eine getrennte Aufnahmeeinheit (41, 42, 43, 44) aufweist.

6. Sichtsystem (10) nach einem der Ansprüche 1 bis 6, wobei die Erfassungseinheit (40, 41, 42, 43, 44, 45) eine gemeinsame Aufnahmeeinheit (45) zum Aufnehmen eines Bilds, das zumindest zwei der mehreren Bilder beinhaltet, aufweist,
wobei bevorzugt zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an das erste Bild (22) und angrenzend in Längsrichtung des Nutzfahrzeugs an das zweite Bild (23) liegt und an den ersten Modifikationsbereich (24) in Längsrichtung des Nutzfahrzeugs angrenzt, und/oder
wobei bevorzugt zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an nur das erste Bild (22) liegt und in Weitwinkelrichtung des zweiten Bilds (23) an den ersten Modifikationsbereich (24) angrenzt, und/oder
wobei bevorzugt zumindest ein zweiter Modifikationsbereich (26) in einem oberen Bildbereich und/oder zumindest ein zweiter Modifikationsbereich (28) in einem unteren Bildbereich angrenzend in Längsrichtung des Nutzfahrzeugs an nur das erste Bild (22) liegt und den zweiten Modifikationsbereich (24) zumindest teilweise überlappt, und/oder
wobei bevorzugt zumindest ein zweiter Modifikationsbereich (28) angrenzend in Weitwinkelrichtung des zweiten Bilds (23) an nur das erste Bild (22) und in der Nähe des Fahrzeugs liegt.

7. Sichtsystem (10) nach einem der Ansprüche 1 bis 3, wobei die Berechnungseinheit (38) ferner angepasst ist, mindestens eins der mehreren Bilder dem gemeinsamen Bild (21), in dem das mindestens erste Bild (22) und das zweite Bild (23) nahtlos unmittelbar aneinander grenzend zusammengesetzt sind, zu überlagern,
wobei bevorzugt sich der zweite Modifikationsbereich (30) in dem mindestens einen der mehreren Bilder, das das gemeinsame Bild (21) überlagert, befindet, und/oder
wobei bevorzugt die Berechnungseinheit (38) ferner angepasst ist, mindestens eins der mehreren Bilder dem gemeinsamen Bild (21), in dem das mindestens erste Bild (22) und das zweite Bild (23) nahtlos unmittelbar aneinander grenzend zusammengesetzt ist, zu überlagern, wenn das Nutzfahrzeug einen vorbestimmten Fahrzustand aufweist.

8. Sichtsystem (10) nach einem der vorhergehenden Ansprüche, wobei das gemeinsame Bild (21) ferner sichtbare Grenzlinien (33) aufweist, die die Modifikationsbereiche (24, 26, 28, 30) voneinander optisch trennt.

9. Sichtsystem (10) nach einem der vorhergehenden Ansprüche, wobei mindestens eins der mehreren Bilder einen Nutzfahrzeugseitenbereich (3A) und/oder einen Nutzfahrzeugfrontbereich (3B) beinhaltet und die Berechnungseinheit (38) die mehreren Bilder derart zusammensetzt, dass der Nutzfahrzeugseitenbereich (3A) und/oder der Nutzfahrzeugfrontbereich (3B) im gemeinsamen Bild (21) gezeigt werden/wird.

10. Sichtsystem (10) nach einem der vorhergehenden Ansprüche, wobei die Berechnungseinheit (38) zumindest einen der Modifikationsbereiche (24, 26, 28, 30) durch Weglassen jeder n-ten Pixelreihe in der Weitwinkelrichtung und/oder in der Längsrichtung ausdünnt, wobei n ≥ 2, und/oder durch Stehenlassen jeder k-ten Pixelreihe in der Weitwinkelrichtung ausdünnt, wobei k ≥ 2.

11. Sichtsystem (10) nach Anspruch 10, wobei das Weglassen jeder n-ten Pixelreihe oder das Stehenlassen jeder k-ten Pixelreihe in der gesamten Erstreckung des jeweiligen Bilds in Weitwinkelrichtung und/oder in Längsrichtung gleichmäßig erfolgt.

12. Sichtsystem (10) nach einem der Ansprüche 1 bis 10, wobei die Berechnungseinheit (38) zumindest einen der Modifikationsbereich (24, 26, 28, 30) durch Weglassen von Pixelreihen in der Weitwinkelrichtung und/oder in der Längsrichtung ausdünnt, wobei die Anzahl der weggelassenen Pixelreihen mit zunehmender Entfernung vom Fahrzeug zunimmt, vorzugsweise gleichmäßig zunimmt.

13. Sichtsystem (10) nach einem der Ansprüche 10 oder 12, wobei das Ausdünnen im ersten Modifikationsbereich (24) nur bezüglich der Weitwinkelrichtung und/oder in einem der zweiten Modifikationsbereiche (26, 28, 30) nur bezüglich der Längsrichtung erfolgt.

14. Sichtsystem (10) nach Anspruch 12, wobei das Ausdünnen über die gesamte Erstreckung des jeweiligen Bilds bezüglich der Weitwinkelrichtung und/oder bezüglich der Längsrichtung gleichmäßig zunehmend mit zunehmender Entfernung vom Fahrzeug erfolgt.

15. Sichtsystem (10) nach einem der vorhergehenden Ansprüche, wobei eins der mehreren Bilder das Sichtfeld eines Rampenspiegels (Sichtfeld V) beinhaltet und/oder wobei eins der mehreren Bilder das Sichtfeld eines Frontspiegels (Sichtfeld VI) beinhaltet.

## Claims

1. A visual system (10) for a commercial vehicle (1) for displaying legally prescribed fields of view (51, 52, 61, 62) of a main mirror and a wide-angle mirror on the same side of the vehicle in a driver's cabin of the commercial vehicle (1) comprising
a display unit (20) in the driver's cabin,
an capturing unit (40, 41, 42, 43, 44, 45), and
a calculation unit (38), which processes images captured from the capturing unit (40, 41, 42, 43, 44, 45) and supplies them to the display unit (20) for display,
wherein the capturing unit (40, 41, 42, 43, 44, 45) is adapted to capture a plurality of images comprising at least one first image (22) including at least the field of view of the main mirror, and a second image (23) including at least the portion of the field of view of the wide-angle mirror which is not part of the field of view of the main mirror,
wherein the calculation unit (38) is adapted to seamlessly combine the plurality of images in a seamless and directly adjacent manner into a common image (21), such that the first image (22) and the second image (23) have a common perspective,
wherein the representations of the first image (22) and the second image (23) are aligned in the longitudinal direction of the commercial vehicle perpendicular to the wide-angle direction,
at least the second image (23) in at least one wide-angle direction, which is substantially perpendicular to the direction of view and horizontal, has a wide-angle image angle, which is larger than the natural impression of the human eye and is thus distorted, and the first image (22) is substantially undistorted in the wide-angle direction of the second image (23),
wherein at least the second image (23) is modified in the wide-angle direction at least in a first modification region (24), such that the image extension in the wide-angle direction is reduced,
**characterized in that**
a boundary line (31) between a modification region (24, 26, 28, 30) and an unmodified region is described by a non-linear function, which is preferably arc-shaped, or
a boundary line (31) between a modification region (24, 26, 28, 30) and an unmodified region is described by a non-constant linear function.

2. The visual system according to claim 1, wherein the common image (21) comprises at least one second modification region (24, 26, 28, 30), which is different from the first modification region (24), in which at least one of the plurality of images is modified in the longitudinal direction of the commercial vehicle and/or a wide-angle direction of the plurality of images such that its image extension is reduced in this direction.

3. The visual system (10) according to claim 1,
wherein the boundary line (33) between two of the plurality of images, preferably between the first image (22) and the second image (23), is described by a non-linear function, which is preferably arc-shaped, or
wherein a boundary line (33) between the plurality of images is described by a non-constant linear function,
wherein preferably the boundary line (31) between a modification region (24, 26, 28, 30) and an unmodified region coincides with the boundary line (33) between the two of the plurality of images.

4. The visual system (10) according to any one of the preceding claims, wherein the calculation unit (38) is adapted to combine all of the plurality of images in in a seamless and directly adjacent manner into the common image (21), such that all of the plurality of images have a common perspective.

5. The visual system (10) according to any one of the preceding claims, wherein the capturing unit (40, 41, 42, 43, 44, 45) comprises a separate capturing unit (41, 42, 43, 44) for at least two of the plurality of images.

6. The visual system (10) according to any one of claims 1 to 6, wherein the capturing unit (40, 41, 42, 43, 44, 45) comprises a common capturing unit (45) for capturing an image which comprises at least two of the plurality of images,
wherein preferably a second modification region (26) is located in an upper image region and/or at least one second modification region (28) is located in a lower image region adjacent to the first image (22) in the longitudinal direction of the commercial vehicle and adjacent to the second image (23) in the longitudinal direction of the commercial vehicle, and is adjacent to the first modification region (24) in the longitudinal direction of the commercial vehicle and/or
wherein preferably at least a second modification region (26) in an upper image region and/or at least one second modification region (28) in a lower image region is/are located adjacent to only the first image (22) in the longitudinal direction of the commercial vehicle, and adjacent to the first modification region (24) in the wide-angle direction of the second image (23), and/or
wherein preferably at least a second modification region (26) in an upper image region and/or at least one second modification region (28) in a lower image region is/are located adjacent to only the first image (22) in the longitudinal direction of the commercial vehicle, and at least partially overlap(s) the second modification region (24), and/or
wherein preferably at least one second modification region (28) is located adjacent in the wide-angle direction of the second image (23) to only the first image (22) and in the vicinity of the vehicle.

7. The visual system (10) according to any one of claims 1 to 3, wherein the calculation unit (38) is further adapted to superimpose at least one of the plurality of images on the common image (21) in which the at least first image (22) and the second image (23) are combined in a seamless and directly adjacent manner,
wherein preferably the second modification region (30) is located in at least one of the plurality of images which overlaps the common image (21) and/or
wherein preferably the calculation unit (38) is further adapted to superimpose at least one of the plurality of images on the common image (21), in which the at least one first image (22) and the second image (23) are combined in a seamless and directly adjacent manner if the commercial vehicle is in a predetermined driving state.

8. The visual system (10) according to any one of the preceding claims, wherein the common image (21) further comprises visible boundary lines (23) optically separating the modification regions (24, 26, 28, 30) from each other.

9. The visual system (10) according to any one of the preceding claims, wherein at least one of the plurality of images includes a commercial vehicle side region (3A) and/or a front region of the commercial vehicle (3B), and the calculation unit (38) combines the plurality of images such that the side region of the commercial vehicle (3A) and/or the front region of the commercial vehicle (3B) is/are displayed in the common image (21).

10. The visual system (10) according to any one of the preceding claims, wherein the calculation unit (38) thins out at least one of the modification regions (24, 26, 28, 30) by omitting each n^{th} pixel row in the wide-angle direction and/or the longitudinal direction, wherein n ≥ 2, and/or by leaving each k^{th} pixel row in the wide-angle direction, wherein k ≥ 2.

11. The visual system (10) according to claim 10, wherein omitting of each n^{th} pixel row or leaving of each k^{th} pixel row is evenly carried out over the entire extension of the respective image in the wide-angle direction and/or longitudinal direction.

12. The visual system (10) according to any one of claims 1 to 10, wherein the calculation unit (38) thins out at least one of the modification regions (24, 26, 28, 30) by omitting pixel rows in the wide-angle direction and/or in the longitudinal direction, wherein the number of omitted pixel rows increases, preferably evenly increases, with increasing distance from the vehicle, preferably evenly increases.

13. The visual system (10) according to one of claims 10 or 12, wherein thinning in the first modification region (24) is effected only with respect to the wide-angle direction and/or thinning in one of the second modification regions (26, 28, 30) is effected only with respect to the longitudinal direction.

14. The visual system (10) according to claim 12, wherein thinning over the entire stretching of the respective image is carried out in a evenly increasing manner with increasing distance from the vehicle with respect to the wide-angle direction and/or the longitudinal direction.

15. The visual system (10) according to any one of the preceding claims, wherein one of the plurality of images includes the field of view of a ramp mirror (field of view V) and/or wherein one of the plurality of images includes the field of view of a front mirror (field of view VI).

## Revendications

1. Système de vision (10) pour un véhicule utilitaire (1) destiné à la représentation de champs de vision (51, 52, 61, 62) règlementaires d'un rétroviseur principal et d'un rétroviseur grand angle du même côté de véhicule dans une cabine de conduite du véhicule utilitaire (1), contenant
une unité d'affichage (20) dans la cabine de conduite ;
une unité de détection (40, 41, 42, 43, 44, 45) ; et
une unité de calcul (38) qui traite des images détectées par l'unité de détection (40, 41, 42, 43, 44, 45) et les transmet pour affichage à l'unité d'affichage (20),
dans lequel l'unité de détection (40, 41, 42, 43, 44, 45) est adaptée afin de détecter plusieurs images avec au moins une première image (22) qui contient le champ de vision du rétroviseur principal, et une seconde image (23) qui contient au moins la partie du champ de vision du rétroviseur grand angle qui ne fait pas partie du champ de vision du rétroviseur principal,
dans lequel l'unité de calcul (38) est adaptée afin d'assembler plusieurs images en une image commune (21) sans bavure directement contiguës les unes aux autres, en ce que la première image (22) et la seconde image (23) présentent une perspective commune, dans lequel les représentations de la première image (22) et de la seconde image (23) s'alignent dans le sens longitudinal du véhicule utilitaire perpendiculairement au sens grand angle,
au moins la seconde image (23) présente dans au moins un sens grand angle qui est sensiblement perpendiculaire au sens de vue d'image et horizontal, un angle d'image grand angle qui est plus grand qu'il ne corresponde à l'impression naturelle de l'oeil humain, et est ainsi déformée ; et la première image (22) est sensiblement non déformée dans le sens grand angle de la seconde image (23),
dans lequel au moins la seconde image (23) est modifiée au moins dans une première zone de modification (24) dans le sens grand angle, en ce que l'étirement d'image dans le sens grand angle est réduit,
**caractérisé en ce que**
une ligne limite (31) est décrite entre une zone de modification (24, 26, 28, 30) et une zone non modifiée par une fonction non linéaire, qui est de préférence arquée, ou
**en ce qu'**une ligne limite (31) est décrite entre une zone de modification (24, 26, 28, 30) et une zone non modifiée par une fonction linéaire non constante.

2. Système de vision selon la revendication 1, dans lequel l'image commune (21) présente au moins une seconde zone de modification (24, 26, 28, 30) qui est différente de la première zone de modification (24), dans laquelle au moins une des plusieurs images est modifiée dans le sens longitudinal du véhicule utilitaire et/ou un sens grand angle des plusieurs images de telle manière que son étirement d'image dans ce sens soit réduit.

3. Système de vision (10) selon la revendication 1,
dans lequel une ligne limite (33) est décrite entre deux des plusieurs images, de préférence entre la première image (22) et la seconde image (23) par une fonction non linéaire qui est de préférence arquée, ou
dans lequel une ligne limite (33) est décrite entre deux des plusieurs images par une fonction linéaire non constante,
dans lequel de préférence la ligne limite (31) coïncide entre une zone de modification (24, 26, 28, 30) et une zone non modifiée avec la ligne limite (33) entre les deux des plusieurs images.

4. Système de vision (10) selon l'une quelconque des revendications précédentes, dans lequel l'unité de calcul (38) est adaptée afin d'assembler l'ensemble des plusieurs images en une image commune (21) sans bavure directement contigües les unes aux autres de telle manière que l'ensemble des plusieurs images présente une perspective commune.

5. Système de vision (10) selon l'une quelconque des revendications précédentes, dans lequel l'unité de détection (40, 41, 42, 43, 44, 45) présente pour au moins deux des plusieurs images une unité d'enregistrement séparée (41, 42, 43, 44).

6. Système de vision selon l'une quelconque des revendications 1 à 6, dans lequel l'unité de détection (40, 41, 42, 43, 44, 45) présente une unité d'enregistrement commune (45) pour l'enregistrement d'une image qui contient au moins deux des plusieurs images,
dans lequel de préférence au moins une seconde zone de modification (26) se trouve dans une zone d'image supérieure et/ou au moins une seconde zone de modification (28) dans une zone d'image inférieure contigüe dans le sens longitudinal du véhicule utilitaire à la première image (22) et contiguë dans le sens longitudinal du véhicule utilities à la seconde image (23) et est contiguë à la première zone de modification (24) dans le sens longitudinal du véhicule utilitaire,
et/ou
dans lequel de préférence au moins une seconde zone de modification (26) se trouve dans une zone d'image supérieure et/ou au moins une seconde zone de modification (28) dans une zone d'image inférieure contiguë dans le sens longitudinal du véhicule utilitaire à seulement la première image (22) et est contiguë dans le sens grand angle de la seconde image (23) à la première zone de modification (24), et/ou
dans lequel de préférence au moins une seconde zone de modification (26) se trouve dans une zone d'image supérieure et/ou au moins une seconde zone de modification (28) dans une zone d'image inférieure contigüe dans le sens longitudinal du véhicule utilitaire à seulement la première image (22) et recouvre au moins partiellement la seconde zone de modification (24)
et/ou
dans lequel de préférence au moins une seconde zone de modification (28) se trouve contiguë dans le sens grand angle de la seconde image (23) à seulement la première image (22) et à proximité du véhicule.

7. Système de vision (10) selon l'une quelconque des revendications 1 à 3, dans lequel l'unité de calcul (38) est de plus adaptée afin de superposer au moins une des plusieurs images à l'image commune (21), dans laquelle l'au moins une première image (22) et la seconde image (23) sont assemblées sans bavure directement contiguës l'une à l'autre,
dans lequel de préférence la seconde zone de modification (30) se trouve dans l'au moins une des plusieurs images qui superpose l'image commune (21), et/ou
dans lequel de préférence l'unité de calcul (38) est de plus adaptée afin de superposer au moins une des plusieurs images à l'image commune (21), dans laquelle l'au moins une première image (22) et la seconde image (23) sont assemblées sans bavure directement contiguës l'une à l'autre, lorsque le véhicule utilitaire présente un état de marche prédéterminé.

8. Système de vision (10) selon l'une quelconque des revendications précédentes, dans lequel l'image commune (21) présente de plus des lignes limites visibles (33) qui sépare optiquement les zones de modification (24, 26, 28, 30) les unes des autres.

9. Système de vision (10) selon l'une quelconque des revendications précédentes, dans lequel au moins une des plusieurs images contient une zone latérale de véhicule utilitaire (3A) et/ou une zone avant de véhicule utilitaire (3B) et l'unité de calcul (38) assemble les plusieurs images de telle manière que la zone latérale de véhicule utilitaire (3A) et/ou la zone avant de véhicule utilitaire (3B) soit/soient montrées dans l'image commune (21).

10. Système de vision (10) selon l'une quelconque des revendications précédentes, dans lequel l'unité de calcul (38) diminue au moins une des zones de modification (24 26, 28, 30) en omettant chaque n ligne de pixels dans le sens grand angle et/ou dans le sens longitudinal, dans lequel n ≥ 2, et/ou diminue en laissant chaque k ligne de pixels dans le sens grand angle, dans lequel k ≥ 2.

11. Système de vision (10) selon la revendication 10, dans lequel l'omission de chaque n ligne de pixels ou le fait de laisser chaque k ligne de pixels est effectué uniformément dans l'étirement entier de l'image respective dans le sens grand angle et/ou dans le sens longitudinal.

12. Système de vision (10) selon l'une quelconque des revendications 1 à 10, dans lequel l'unité de calcul (38) diminue au moins une des zones de modification (24, 26, 28, 30) en omettant des lignes de pixels dans le sens grand angle et/ou dans le sens longitudinal, dans lequel le nombre de lignes de pixels omises augmente avec l'éloignement croissant du véhicule, de préférence augmente uniformément.

13. Système de vision (10) selon l'une quelconque des revendications 10 ou 12, dans lequel la diminution dans la première zone de modification (24) est effectuée seulement par rapport au sens grand angle et/ou dans une des secondes zones de modification (26, 28, 30) seulement par rapport au sens longitudinal.

14. Système de vision (10) selon la revendication 12, dans lequel la diminution par le biais de l'étirement entier de l'image respective par rapport au sens grand angle et/ou par rapport au sens longitudinal est effectuée uniformément progressivement avec l'éloignement croissant du véhicule.

15. Système de vision (10) selon l'une quelconque des revendications précédentes, dans lequel une des plusieurs images contient le champ de vision d'un rétroviseur de rampe (champ de vision V) et/ou dans lequel une des plusieurs images contient le champ de vision d'un rétroviseur avant (champ de vision VI).
